# EUROPÄISCHE PATENTSCHRIFT

(11) **EP 3 709 108 B1**
(45) Veröffentlichungstag und Bekanntmachung des Hinweises auf die Patenterteilung: **12.10.2022**
(21) Anmeldenummer: 20162847.6
(22) Anmeldetag: 12.03.2020
(51) Int. Cl.: G05B 19/042

(54) **KONFIGURATION EINES ZWEIPOLIGEN EINGANGS**
TWO-POLE INPUT CONFIGURATION
CONFIGURATION D'UNE ENTRÉE BIPOLAIRE

(30) Priorität: 14.03.2019 DE 102019106566
(43) Veröffentlichungstag der Anmeldung: 16.09.2020
(73) Patentinhaber: Samson Aktiengesellschaft, 60314 Frankfurt am Main (DE)
(72) Erfinder: WETZ, Thorsten, 35519 Rockenberg (DE)
(74) Vertreter: Köllner, Malte

(56) Entgegenhaltungen:
- EP-A2- 2 546 664
- DE-A1-102016 116 378
- DE-A1-102017 002 296
- US-A1- 2014 281 048

## Beschreibung

### Gebiet der Erfindung

Die Erfindung betrifft die Konfiguration zweipoliger Eingänge von Feldgeräten.

Feldgeräte werden in der Verfahrens-, Prozess- oder Automatisierungstechnik zur Erfassung und/oder Beeinflussung von Prozessgrößen zum Einsatz gebracht. Die entsprechenden verfahrens- oder fertigungstechnischen Anlagen werden dabei stetig komplexer und intelligenter. Dies gilt v.a. für die Integration von Konzepten im Sinne einer Industrie 4.0, die
i) eine Vernetzung der einzelnen Komponenten bzw. Feldgeräte einer Anlage,
ii) eine freie Verfügbarkeit von Informationen innerhalb der Anlage,
iii) technische Assistenzsysteme und
iv) autonom operierende Baugruppen
umfassen. Dementsprechend müssen immer mehr und unterschiedlichere Signale erfasst, verarbeitet und übertragen werden. Die Zahl der entsprechenden Signaleingänge, die sowohl zur Strom- bzw. Spannungsversorgung als auch zur Einspeisung von Fühler-, Regel- oder Steuersignalen dienen, wächst stetig und verlangt eine immer aufwendigere Konfiguration, Installation und Instandhaltung.

Die damit einhergehenden Kosten können durch den Einsatz von Universaleingängen gesenkt werden, d.h. zweipoligen Eingängen, mit denen alle Signale bzw. Eingangssignale, die in einer Anlage verwendet werden, erfasst und verarbeitet werden können. Oft handelt es sich dabei um Strom- oder Spannungssignale bzw. um Signale von Messwiderständen, Binärkontakten oder Schaltern. Die Verwendung standardisierter Signale, z.B. 0(4) - 20 mA für Ströme (d.h. 0 - 20 mA oder 4 - 20 mA mit versetztem Nullpunkt bzw. Offset), 0(2) - 10 V für Spannungen (d.h. 0 - 10 V oder 2 - 10 V mit versetztem Nullpunkt bzw. Offset), 400 - 1800 Ω für Widerstände, etc., vereinfacht die Inbetriebnahme, Wartung und Steuerung der Feldgeräte zusätzlich, da die gerätespezifischen Baugruppen an die standardisierten Wertebereiche angepasst bzw. darauf ausgelegt werden können. Dies erhöht zudem die Sicherheit der Geräte bzw. der Anlage. Dafür muss der Betreiber sicherstellen, dass die Wertebereiche eingehalten werden bzw. dass alle verwendeten Quellen von Eingangssignalen in der vorgesehenen Art und Weise funktionieren. Da dies für den ordnungsgemäßen und sicheren Betrieb der Anlage ohnehin erforderlich ist, stellt dies meist eine vertretbare Anforderung dar.

Um einen zweipoligen Eingang als Universaleingang nutzen zu können, muss er an das entsprechende Eingangssignal angepasst werden. Eine derartige Konfiguration kann z.B. über eine Konsole erfolgen, über die die entsprechende Funktion zur Erfassung von Strom-, Spannungs-, Binärkontakt-/Schalter- oder anderen Signalen eingestellt wird. Derartige manuelle Konfigurationsschritte sind jedoch aufwendig, langsam und fehleranfällig.

### Stand der Technik

Es gibt vielfältige Bestrebungen, die Installation, Konfiguration und Instandhaltung von Feldgeräten zu automatisieren.

In der europäischen Patentanmeldung EP 3 141 971 A1 wird z.B. eine automatische Prüfung der Installation eines Ventils mit einem Aktor beschrieben, bei dem eine oder mehrere Positionen des Aktors angefahren werden und die korrekte Funktionsweise des Ventils oder einer seiner Komponenten überprüft wird. Fehlerzustände werden auf diese Weise zwar erkannt, müssen allerdings weiterhin manuell behoben werden. Auch die Konfiguration des Ventils und seiner Komponenten, wie z.B. der Signaleingänge, muss nach wie vor manuell durchgeführt werden, da im Rahmen des Verfahrens nur Fehlerzustände erkannt und ausgegeben werden.

Ein weiteres Beispiel für eine automatisierte Überprüfung der korrekten Funktionsweise eines Feldgeräts bzw. einer seiner Komponenten wird in der Patentanmeldung DE 10 2014 11 758 A1 beschrieben. Das Verfahren betrifft Feldgeräte mit einem Messgerät zur Erfassung einer Prozessgröße, bei dem ein Prüfsignal in das Messgerät bzw. die Messsignalverarbeitung zur Überprüfung der korrekten Funktionsweise eingespeist wird. Weicht das anschließend von der Messsignalverarbeitung ausgegebene Signal von den Erwartungen ab, wird das Feldgerät in einen Fehlerzustand versetzt, der wiederum manuell behoben werden muss.

Eine weitere Variante einer zumindest teil-automatisierten Überwachung wird in der Gebrauchsmusterschrift DE 20 2016 008 525 U1 vorgestellt. Dabei kommen signalgebundene Überwachungseinheiten zum Einsatz, die für jedes Feldgerät individuell gestaltet werden können und Betriebsinformationen des Feldgeräts in Form von Signalisierungscodes an eine Leitwarte sendet.

Nach dem Verfahren, das in DE 10 2017 200 134 A1 beschrieben wird, kann mithilfe solcher oder zumindest ähnlicher Überwachungseinheiten nach einer Konfigurations- und Lernphase, in der Initialisierungstelegramme und Betriebsinformationen mitgeschnitten und ausgewertet werden, Abweichungen von einem normalen Betriebszustand bzw. Störungen einer Anlage automatisch erkannt werden.

Wird ein Fehler aufgrund eines defekten Gerätes erkannt, kann der Austausch des Geräts durch das Verfahren vereinfacht werden, das in der Patentanmeldung DE 10 2004 040 282 A1 angegeben ist. Es basiert auf der Speicherung von Betriebskenngrößen, wie z.B. einer anlagenspezifischen Parametrierung bzw. Kalibrierung eines Feldgeräts, die nach dem Austausch auf das neue Feldgerät übertragen werden.

Des Weiteren beschreibt die deutschen Patentanmeldung DE 10 2015 114 442 A1 ein Verfahren zur Aktivierung inaktiver Schnittstellen bzw. von Signaleingängen, die z.B. zur Inbetriebnahme und Wartung genutzt werden können bzw. für den ständigen Betrieb nicht benötigt werden. Das Verfahren ermöglicht somit eine externe Steuerung bzw. Konfiguration von Feldgeräten, die allerdings auf eine Re-Parametrierung oder Kalibrierung beschränkt bleibt. Die Funktion der Schnittstellen bzw. der Signaleingänge wird - wie bei allen zuvor genannten Verfahren - weder bestimmt noch eingestellt und muss in einem manuellen Schritt vorgegeben werden.

### Aufgabe

Aufgabe der Erfindung ist es, die Konfiguration von zweipoligen elektrischen Eingängen zu vereinfachen und sicherer zu gestalten und damit auch die Installation, Wartung und den Betrieb der entsprechenden (Feld-)Geräte und Anlagen zu verbessern.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zur Konfiguration eines zweipoligen elektrischen Eingangs vorgeschlagen. Der elektrische Eingang wird zumindest mit Mitteln zum Messen einer elektrischen Spannung und/oder eines elektrischen Stroms und/oder eines elektrischen Widerstands ausgestattet. Ferner umfasst der Eingang eine Steuerung zum Steuern der Messmittel. Wird ein elektrisches Eingangssignal an den zweipoligen elektrischen Eingang angelegt, ermittelt die Steuerung, ob das Eingangssignal von einer elektrischen Spannungsquelle oder von einer elektrischen Stromquelle oder von einem elektrischen Widerstand oder von einem elektrischen Schalter stammt. Dies erfolgt mithilfe mindestens einer Messung an dem zweipoligen Eingang, die von der Steuerung mit Hilfe der Messmittel durchgeführt wird. Anschließend passt die Steuerung den zweipoligen elektrischen Eingang an die ermittelte Quelle des Eingangssignals an.

Eingangssignale werden auf diese Weise eindeutig identifiziert bzw. erkannt. Zudem konfiguriert sich der Eingang selbst, so dass er in der Lage ist, das identifizierte Eingangssignal nicht nur zu verarbeiten, sondern ggf. auch das an den Eingang bzw. Feldgerät angeschlossene Gerät wie z.B. einen Schalter oder Binärkontakt, Sensor, Fühler, ein Potentiometer, eine Strom- oder Spannungsquelle zu erkennen.

Derartige zweipolige Eingänge verhalten sich intelligent oder smart in dem Sinne, dass sie selbst das angelegte Eingangssignal erkennen und sich daran anpassen, ohne den Zwischenschritt einer manuellen Konfiguration bzw. Anpassung. Die Installation, Wartung und der Betrieb von (Feld-)Geräten und Anlagen, die mit solchen selbstadaptierenden, smarten oder intelligenten Eingängen ausgestattet sind, ist im Vergleich zur Installation von Eingängen, die manuell konfiguriert werden müssen, erheblich einfacher.

Zudem werden Störungen, Fehlfunktionen und Schäden durch eine fehlerhafte manuelle Einstellung eines elektrischen Eingangs eines (Feld-)Geräts oder einer gesamten Anlage vermieden. Dies gilt insbesondere, wenn die zum Einsatz gebrachten Eingangssignale bestimmte Werte nicht unter- oder überschreiten können, da es sich z.B. um Nenn-, Einheits- oder Standardsignale handelt. In diesen Fällen können im Zusammenspiel mit der erfindungsgemäßen Konfiguration die Mittel zur Verarbeitung oder Messung der zu erwartenden Eingangssignale optimiert und oft kostengünstig gestaltet werden, da Komponenten zur Fehlererkennung bzw. Überlastmechanismen entweder entfallen oder zumindest schwächer ausgelegt werden können bzw. Grenzwerte und Betriebsparameter enger gesteckt werden können.

Die Mittel zum Messen können analoge oder digitale Messvorrichtungen sein und z.B. Analog-Digital-Konverter und/oder Operationsverstärker und/oder Stromquellen umfassen. Für eine Spannungsmessung eignen sich z.B. elektrostatische Messvorrichtungen oder Spannungskompensatoren. Die Mittel zum Messen von Spannungen können über dem Fachmann bekannte Verschaltungen auch für Strommessungen verwendet werden. Dafür kommen allerdings auch Messvorrichtungen in Frage, die elektrische Ströme mithilfe von Magnetfeldern messen, wie z.B. in einer Zangenstrommessvorrichtung.

Das Verfahren eignet sich insbesondere für elektronische Geräte und Signalgeber und demnach zur Erkennung von Gleichstrom-/DC- bzw. Gleichspannungssignalen. Es ist aber nicht auf diese Signale beschränkt. Wechselstrom-/AC bzw. Wechselspannungssignale können ebenfalls erkannt und der zweipolige Eingang daran angepasst werden, u.U. mithilfe von Gleichrichtern bzw. I- oder LZI-Gliedern zur Integration von Signalen und Mittelwertbildung.

Die Mittel zum Messen können typischerweise eine Spannung, einen Strom oder einen Widerstandswert messen. Um die Art des Eingangssignals erkennen zu können, müssen diese Messungen in einem Algorithmus in bestimmter Weise nacheinander - möglicherweise abhängig von Fallunterscheidungen - ausgeführt werden.

Die Eingangssignale, die es typischerweise zu identifizieren gilt, sind entweder ein Stromsignal, ein Spannungssignal, ein Widerstand, ein Schalter oder eine Verpolung. Es müssen natürlich nicht immer alle Fälle auftreten. Maximal müssen fünf Arten von Eingangssignalen unterschieden werden.

Führt man eine Spannungsmessung aus, so kann man typischerweise vier Ergebnisse erzielen:
- die Spannung ist negativ,
- die Spannung ist null oder jedenfalls sehr klein,
- die Spannung hat einen messbaren Wert,
- die Spannung ist zu groß.

D. h. mit einer Spannungsmessung lassen sich typischerweise maximal vier Fälle identifizieren, nicht aber fünf. Ähnlich verhält es sich, wenn man eine Strommessung oder eine Widerstandsmessung ausführt.

Grundsätzlich ist es möglich, die Messungen der Spannung, des Stroms oder des Widerstandswerts in beliebiger Reihenfolge auszuführen. Im Allgemeinen wird man mindestens zwei dieser Messungen ausführen müssen, um die Art des Eingangssignals eindeutig erkennen zu können - es sei denn, man hat z.B. nur zwei Signalarten zu unterscheiden.

Aus rein algorithmischer Sicht würde sich eventuell empfehlen, zunächst eine Widerstandsmessung durchzuführen, da mit Hilfe der Widerstandsmessung wahrscheinlich eine Stromquelle von einer Spannungsquelle und von einem Widerstand unterschieden werden könnte.

Aus Sicherheitsgründen empfiehlt es sich jedoch, zunächst mit einer ersten Spannungsmessung zu beginnen. Dazu wird der elektrische Eingang mit Mitteln zum Messen einer elektrischen Spannung ausgestattet. Die Steuerung führt damit in einem ersten Schritt nach dem Anlegen eines elektrischen Eingangssignals an dem zweipoligen elektrischen Eingang eine Spannungsmessung durch.

Dieses Vorgehen eignet sich insbesondere für Situationen, in denen Eingangssignale von Spannungsquellen von Eingangssignalen anderer Quellen unterschieden werden sollen. Auch in anderen Situationen ist es vorteilhaft mit einer Spannungsmessung zu beginnen, da Spannungsmessungen mithilfe großer (Ersatz-)Widerstände erfolgen, die einerseits durch fehlerhafte Eingangssignale nur schwer zu beschädigen sind und andererseits fehlerhafte Signale derart abschwächen, dass die anderen elektrischen bzw. elektronischen Komponenten des Eingangs effektiv vor Beschädigungen geschützt sind. Der Betrieb zweipoliger Eingänge wird dadurch erheblich sicherer.

Um Eingangssignale von Strom- oder Spannungsquellen zu verarbeiten, kann der elektrische Eingang zusätzlich zu den Mitteln zum Messen einer elektrischen Spannung mit Mitteln zum Messen eines elektrischen Stroms ausgestattet werden. Die Steuerung kann dazu in einem zweiten Schritt das Ergebnis der Spannungsmessung aus dem ersten Schritt dahingehend prüfen, ob die gemessene Spannung einen Maximalwert überschreitet, woraufhin die Steuerung bei einem positiven Ergebnis der Prüfung erkennt, dass das Eingangssignal von einer Stromquelle stammt, und in einem dritten Schritt den zweipoligen elektrischen Eingang an das Eingangssignal der Stromquelle anpasst, indem sie die Mittel zum Messen eines elektrischen Stroms einschaltet.

Der Maximalwert zur Prüfung der gemessenen Spannung ergibt sich aus den Eingangssignalen der Spannungsquellen, die für den Betrieb der Feldgeräte bzw. der Anlage verwendet werden. In der Regel handelt es sich dabei um Spannungsquellen eines bestimmten Typs oder einer bestimmten Serie, bevorzugterweise um Spannungsquellen, die standardisierte Spannungssignale liefern. Die standardisierten Signale liegen in vielen Fällen in einem Bereich zwischen 0(2) und 10 V (d.h. 0 - 10 V oder 2 - 10 V mit versetztem Nullpunkt bzw. Offset). In diesen Fällen wäre der Maximalwert zur Prüfung der gemessenen Spannung 10 V. Für den Fachmann ist es offensichtlich, dass das Verfahren nicht auf diese Werte bzw. diesen Spannungsbereich beschränkt ist.

Liegt der gemessene Spannungswert über einem solchen Maximalwert kann es sich bei der angeschlossenen Quelle nicht um eine der Spannungsquellen handeln, die vom Betreiber der Anlage bzw. des Feldgeräts zum Einsatz gebracht werden bzw. werden sollen (z.B. um Sicherheitsvorgaben zu erfüllen). Das Eingangssignal bzw. der Spannungsabfall, der gemessen wurde, muss demnach von einer Stromquelle stammen.

Eingangssignale von Stromquellen lassen sich auf diese Weise sehr einfach bestimmen. Es ist auch möglich, dass die Überschreitung einer Maximalspannung auf einen Fehler des angeschlossenen Geräts oder eine andere Fehlerquelle hindeutet, z.B. wenn ausgeschlossen werden kann, dass eine Stromquelle zum Einsatz gebracht wurde. Der Eingang kann in diesen Fällen so ausgestaltet werden, dass er mit einer Fehlermeldung reagiert.

Ergibt die Prüfung im zweiten Schritt, dass das Ergebnis der Spannungsmessung größer als eine Minimalspannung Uₘᵢₙ und kleiner oder gleich einer Maximalspannung Uₘₐₓ ist, sind weitere Schritte notwendig, um das Eingangssignal einer elektrischen Strom- oder Spannungsquelle zuzuordnen. Die Steuerung führt dazu in einem dritten Schritt mit den Mitteln zum Messen einer elektrischen Spannung eine zweite Spannungsmessung durch. Für diese zweite Spannungsmessung wird ein (Innen-)Widerstand verwendet, der kleiner ist als der für die erste Spannungsmessung verwendete Widerstand. Eine solche zweite Spannungsmessung mit einem kleineren Widerstand wird in der Praxis häufig auch als Strommessung bezeichnet.

In einem vierten Schritt prüft die Steuerung das Ergebnis der zweiten Spannungsmessung dahingehend, ob es größer als das Ergebnis der ersten Spannungsmessung ist.

Liegt am Eingang ein Spannungssignal an, so wird die zweite Spannungsmessung das gleiche Ergebnis liefern wie die erste Spannungsmessung. (In der Praxis wird aus schaltungstechnischen Gründen häufig eine höhere Spannung beobachtet.) Damit wäre das Eingangssignal eindeutig als ein Spannungssignal erkannt. Nachdem die Steuerung auf diese Weise die Quelle des Eingangssignals eindeutig erkannt hat, passt sie in einem fünften Schritt den zweipoligen elektrischen Eingang an das Eingangssignal der Spannungsquelle an, indem sie die Mittel zum Messen einer elektrischen Spannung einschaltet.

Liegt am Eingang hingegen einen Stromsignal an, so wird über den nun kleineren Messwiderstand eine kleinere Spannung abfallen. Verändert sich also die Spannung in diesem Sinne, so ist das Eingangssignal eindeutig als ein Stromsignal erkannt. Nachdem die Steuerung auf diese Weise die Quelle des Eingangssignals eindeutig erkannt hat, passt sie in einem fünften Schritt den zweipoligen elektrischen Eingang an das Eingangssignal der Stromquelle an, indem sie die Mittel zum Messen eines elektrischen Stroms einschaltet.

Auf diese Weise lassen sich Strom- und Spannungssignale unterscheiden, die mithilfe der ersten Spannungsmessung nicht voneinander unterschieden werden konnten.

Bei den bisher diskutierten Fällen ergibt die erste Spannungsmessung einen Wert, der größer als eine Minimalspannung Uₘᵢₙ ist. Ergibt die Prüfung im Anschluss an die erste Spannungsmessung, dass das Ergebnis der Spannungsmessung größer oder gleich 0 und kleiner oder gleich einer Minimalspannung Uₘᵢₙ ist, d.h. nahe dem Nullpunkt, sind weitere Schritte notwendig, um das Eingangssignal, z.B. einem elektrischen Widerstand, einer elektrischen Strom- oder Spannungsquelle zuzuordnen. Dazu wird der elektrische Eingang zusätzlich zu den Mitteln zum Messen einer elektrischen Spannung bzw. eines elektrischen Stroms mit Mitteln zum Messen eines elektrischen Widerstands ausgestattet. Die Steuerung führt dann in einem dritten Schritt eine Widerstandsmessung durch. Dabei prüft die Steuerung in einem vierten Schritt das Ergebnis der Widerstandsmessung.

Ist der Wert der Widerstandsmessung größer als ein Maximalwert Rₘₐₓ, erkennt die Steuerung, dass eine Stromquelle an den zweipoligen Eingang angeschlossen wurde, deren Signal nicht von 0 mA unterschieden werden kann. Dabei nutzt die Steuerung Informationen über die verwendeten Quellen. In diesem Fall nutzt sie die Information, dass das Eingangssignal lediglich von elektrischen Widerständen, Strom- oder Spannungsquellen stammen kann. Darüber hinaus nutzt sie die Information, dass der Innenwiderstand der verwendeten Stromquellen immer größer ist als die Innenwiderstände der verwendeten Spannungsquellen bzw. der verwendeten elektrischen Widerstände. Nachdem die Steuerung auf diese Weise erkannt hat, dass eine Stromquelle an den zweipoligen Eingang angeschlossen wurde, passt sie in einem fünften Schritt den zweipoligen elektrischen Eingang an das Eingangssignal der Stromquelle an, indem sie die Mittel zum Messen eines elektrischen Stroms einschaltet.

Ist der Wert der Widerstandsmessung kleiner oder gleich einem Maximalwert Rₘₐₓ und größer als ein Minimalwert Rₘᵢₙ, erkennt die Steuerung, dass das Eingangssignal von einem elektrischen Widerstand stammt. Dabei nutzt die Steuerung die bereits aufgeführten Informationen und die Information, dass der Innenwiderstand der verwendeten Spannungsquellen immer kleiner ist als die verwendeten elektrischen Widerstände. Nachdem die Steuerung auf diese Weise erkannt hat, dass ein elektrischer Widerstand an den zweipoligen Eingang angeschlossen wurde, passt sie in einem fünften Schritt den zweipoligen elektrischen Eingang an das Eingangssignal des elektrischen Widerstands an, indem sie die Mittel zum Messen eines elektrischen Widerstands einschaltet bzw. eingeschaltet lässt.

Ist der Wert der Widerstandsmessung kleiner oder gleich einem Minimalwert Rₘᵢₙ, erkennt die Steuerung, dass das Eingangssignal von einer Spannungsquelle stammt, deren Signal nicht von 0 V unterschieden werden kann. Dabei nutzt sie die bereits aufgeführten Informationen. Nachdem die Steuerung auf diese Weise erkannt hat, dass eine Spannungsquelle angeschlossen wurde, passt sie in einem fünften Schritt den zweipoligen elektrischen Eingang an das Eingangssignal der elektrischen Spannungsquelle an, indem sie die Mittel zum Messen einer elektrischen Spannung einschaltet.

Mit diesen Schritten können nicht nur Eingangssignale von Strom- und Spannungsquellen unterschieden werden, sondern auch Signale von Füllstands-, Durchfluss-, Druck-, pH-, Helligkeits-, Feuchtigkeits-, Leitfähigkeits- und Temperaturmessgeräten und/oder elektrischer (Mess- )Widerstände, wie z.B. von Potentiometern, Widerstandsthermometern bzw. Temperaturfühlern (insbesondere von Platin-Messwiderständen wie z.B. PT100 oder PT1000), sofern in einer Anlage einzelne Eingangssignalarten bestimmten Sensortypen eindeutig zugeordnet werden können.

In vielen verfahrenstechnischen Anlagen kommen nicht nur (Mess-)Widerstände, Strom- und Spannungsquellen zum Einsatz sondern auch elektrische Schalter, die sich durch zwei Zustände auszeichnen: einem ersten, geöffneten Zustand, der einem großen Widerstand entspricht (z.B. >2000 Ω), und einem zweiten, geschlossenen Zustand, der einem kleinen Widerstand entspricht (z.B. <400 Ω). Grundsätzlich können elektrische Schalter deshalb von elektrischen Widerständen aufgrund ihres sehr kleinen oder sehr großen Widerstands unterschieden werden, allerdings nicht von Strom- bzw. Spannungsquellen, deren Signal nicht von 0 V bzw. 0 mA unterschieden werden kann. Schließlich weisen Stromquellen selbst (Innen-)Widerstände auf, die größer als 2000 Ω sein können, und Spannungsquellen (Innen-)Widerstände, die kleiner als 400 Ω sein können.

Ergibt in diesen Fällen die Prüfung im Anschluss an die erste Spannungsmessung, dass das Ergebnis der Spannungsmessung größer oder gleich 0 ist und kleiner oder gleich einer Minimalspannung Uₘᵢₙ ist, sind weitere Schritte notwendig, um das Eingangssignal einem elektrischen Schalter, einem elektrischen Widerstand, einer elektrischen Strom- oder Spannungsquelle zuzuordnen. Die Steuerung führt dazu wie im vorhergehenden Beispiel in einem dritten Schritt eine erste Widerstandsmessung durch. Dabei prüft die Steuerung in einem vierten Schritt das Ergebnis der ersten Widerstandsmessung.

Ist der Wert der ersten Widerstandsmessung größer als ein Maximalwert Rₘₐₓ, erkennt die Steuerung, dass entweder ein geöffneter elektrischer Schalter oder eine Stromquelle, deren Signal nicht von 0 mA unterschieden werden kann, an den zweipoligen Eingang angeschlossen wurde. Dabei nutzt die Steuerung wiederum Informationen über die verwendeten Quellen. In diesem Fall nutzt sie die Information, dass das Eingangssignal lediglich von einem elektrischen Schalter, Widerstand, einer Strom- oder Spannungsquelle stammen kann. Darüber hinaus nutzt sie die Information, dass der Innenwiderstand der verwendeten Stromquellen bzw. der effektive Widerstand eines geöffneten Schalters immer größer ist als die Innenwiderstände der verwendeten Spannungsquellen bzw. der verwendeten elektrischen Widerstände. Zur weiteren Unterscheidung führt die Steuerung in einem fünften Schritt Strom- und Widerstandsmessungen so lange abwechselnd durch, bis die Strommessung einen Wert liefert, der größer als ein Minimalwert Iₘᵢₙ ist, oder die Widerstandsmessung einen Wert liefert, der kleiner oder gleich einem Maximalwert Rₘₐₓ ist.

Liefert dann eine der Strommessungen einen Wert, der größer als ein Minimalwert Iₘᵢₙ ist, erkennt die Steuerung, dass das Eingangssignal von einer elektrischen Stromquelle stammt, die z.B. im Laufe des Verfahrens eingeschaltet wurde. In einem sechsten Schritt passt die Steuerung den zweipoligen elektrischen Eingang an das Eingangssignal der elektrischen Stromquelle an, indem sie die Mittel zum Messen eines elektrischen Stroms einschaltet bzw. eingeschaltet lässt.

Liefert stattdessen eine der Widerstandsmessungen einen Wert, der kleiner oder gleich einem Maximalwert Rₘₐₓ ist, erkennt die Steuerung, dass das Eingangssignal von einem elektrischen Schalter stammt, der im Laufe des Verfahrens geschlossen wurde. In einem sechsten Schritt passt die Steuerung den zweipoligen elektrischen Eingang an das Eingangssignal des elektrischen Schalters an, indem sie die Mittel zum Messen eines elektrischen Widerstands einschaltet bzw. eingeschaltet lässt.

Ist der Wert der ersten Widerstandsmessung kleiner oder gleich einem Minimalwert Rₘᵢₙ, erkennt die Steuerung, dass entweder ein geschlossener elektrischer Schalter oder eine Spannungsquelle, deren Signal nicht von 0 V unterschieden werden kann, an den zweipoligen Eingang angeschlossen wurde. Dabei nutzt die Steuerung wiederum Informationen über die verwendeten Quellen. In diesem Fall nutzt sie die Information, dass das Eingangssignal lediglich von einem elektrischen Schalter, Widerstand, einer Strom- oder Spannungsquelle stammen kann. Darüber hinaus nutzt sie die Information, dass der Innenwiderstand der verwendeten Spannungsquellen bzw. der effektive Widerstand eines geschlossenen Schalters immer kleiner ist als der Innenwiderstand der verwendeten Stromquellen bzw. der verwendeten elektrischen Widerstände. Zur weiteren Unterscheidung führt die Steuerung in einem fünften Schritt Spannungs- und Widerstandsmessungen so lange abwechselnd durch, bis die Spannungsmessung einen Wert liefert, der größer als ein Minimalwert Uₘᵢₙ ist, oder die Widerstandsmessung einen Wert liefert, der größer als ein Minimalwert Rₘᵢₙ ist.

Liefert dann eine der Spannungsmessungen einen Wert, der größer als ein Minimalwert Uₘᵢₙ ist, erkennt die Steuerung, dass das Eingangssignal von einer elektrischen Spannungsquelle stammt, die z.B. im Laufe des Verfahrens eingeschaltet wurde. In einem sechsten Schritt passt die Steuerung den zweipoligen elektrischen Eingang an das Eingangssignal der elektrischen Spannungsquelle an, indem sie die Mittel zum Messen einer elektrischen Spannung einschaltet bzw. eingeschaltet lässt.

Liefert stattdessen eine der Widerstandsmessungen einen Wert, der größer als ein Minimalwert Rₘᵢₙ ist, erkennt die Steuerung, dass das Eingangssignal von einem elektrischen Schalter stammt, der im Laufe des Verfahrens geöffnet wurde. In einem sechsten Schritt passt die Steuerung den zweipoligen elektrischen Eingang an das Eingangssignal des elektrischen Schalters an, indem sie die Mittel zum Messen eines elektrischen Widerstands einschaltet bzw. eingeschaltet lässt.

Ist der Wert der ersten Widerstandsmessung größer als ein Minimalwert Rₘᵢₙ und kleiner oder gleich einem Maximalwert Rₘₐₓ, erkennt die Steuerung, dass ein elektrischer Widerstand an den zweipoligen Eingang angeschlossen wurde. Dabei nutzt die Steuerung wiederum Informationen über die verwendeten Quellen. In diesem Fall nutzt sie die Information, dass das Eingangssignal lediglich von einem elektrischen Schalter, Widerstand, einer Strom- oder Spannungsquelle stammen kann. Darüber hinaus nutzt sie die Information, dass der Innenwiderstand der verwendeten Strom- bzw. Spannungsquellen sowie der effektive Widerstand eines geöffneten bzw. geschlossenen Schalter immer größer bzw. kleiner ist als die verwendeten elektrischen Widerstände. Nachdem die Steuerung auf diese Weise erkannt hat, dass ein elektrischer Widerstand an den zweipoligen Eingang angeschlossen wurde, passt sie in einem fünften Schritt den zweipoligen elektrischen Eingang an das Eingangssignal des elektrischen Widerstands an, indem sie die Mittel zum Messen eines elektrischen Widerstands einschaltet bzw. eingeschaltet lässt.

Auf diese Weise können vier Quellen von Eingangssignalen unterschieden werden: elektrische Widerstände, Schalter, Strom- und Spannungsquellen. Die Konfiguration des Eingangs kann zudem flexibel auf Situationen reagieren, bei denen angeschlossene Strom- oder Spannungsquellen noch nicht eingeschaltet wurden oder deren Signal nicht von Null unterschieden werden kann. Dies vereinfacht die Inbetriebnahme und Wartung derartig ausgestatteter Eingänge, Feldgeräte bzw. Anlagen. Darüber hinaus kann die Inbetriebnahme und Wartung eines Feldgeräts oder einer Anlage dahingehend abgesichert werden, dass Strom- und Spannungsquellen zur Konfiguration der Universaleingänge nicht eingeschaltet werden müssen. Gefahren durch eingeschaltete Strom- und Spannungsquellen können auf diese Weise ausgeschlossen oder wenigstens vermieden werden.

Das erfindungsgemäße Verfahren kann zudem derart ausgeführt werden, dass bestimmte Fehler erkannt werden. Ein DC-Eingangssignal kann z.B. mit der falschen Polung an dem zweipoligen Eingang angelegt sein. Derartige Fehler bei der Installation und Inbetriebnahme von Feldgeräten können von der Steuerung erkannt bzw. abgefangen werden, indem sie in einem zweiten Schritt prüft, ob das Ergebnis der ersten Spannungsmessung eine negative Spannung darstellt. Ist das Ergebnis der Prüfung positiv, versetzt die Steuerung in einem dritten Schritt den zweipoligen elektrischen Eingang in einen Fehlerzustand.

In diesem Zustand kann die Steuerung z.B. den Kontakt unterbrechen oder Verpolungsschutzdioden zum Einsatz bringen, so dass kein Strom mehr fließen und Beschädigungen des Eingangs hervorrufen kann. Die Steuerung schützt damit den Eingang vor Beschädigungen aufgrund fehlerhaft angelegter bzw. verpolter Eingangssignale.

Die soeben beschriebenen Schritte zum Erkennen fehlerhaft angelegter DC-Eingangssignale können dahingehend ergänzt werden, dass der Eingang selbst den Fehlerzustand behebt. Dazu kann der Eingang zusätzlich zu den Mitteln zum Messen einer elektrischen Spannung mit Mitteln ausgestattet werden, die ein Umpolen des Eingangssignals ermöglichen. Dazu prüft die Steuerung in einem zweiten Schritt nach der ersten Spannungsmessung, ob die gemessene Spannung negativ ist. Ist das Ergebnis der Prüfung positiv, kehrt die Steuerung in einem dritten Schritt mit den Mitteln zum Umpolen des Eingangssignals die Polung des Eingangssignals um.

Die zweipoligen Eingänge können sich mithilfe dieser zusätzlichen Verfahrensschritte nicht nur an unterschiedliche sondern auch an fehlerhaft angelegte Eingangssignale anpassen.

Die mindestens eine Messung, die die Steuerung zum Ausführen des Verfahrens durchführt, kann mithilfe eines Vierpols erfolgen. Dazu werden die Mittel zum Messen als Vierpol bzw. Zweitor ausgestaltet, wobei der zweipolige elektrische Eingang zwei Pole des Vierpols darstellt und die anderen Pole den Ausgang des Vierpols, an denen das Mess- bzw. Ausgangssignal abgegriffen werden kann.

Die Verwendung von Vierpolen zur Messung ermöglicht es, unterschiedliche Eingangssignale unabhängig von ihrer Art auf eine Mess- bzw. Ausgangssignalart - ggf. in einem bestimmten (Standard-)Intervall - abzubilden. Dies erleichtert die Einspeisung der Mess- bzw. Ausgangssignale an standardisierte Eingänge/Verbindungen von Mikrocontrollern, Computern, anderer informationsverarbeitender Systeme oder Datenleitungen.

Das Ausgangssignal kann z.B. ein Spannungssignal darstellen, das unabhängig von der Art des Eingangssignals in einem vorgegebenen Intervall liegt.

Derartige Spannungssignale können in der Regel mit einfachen Methoden gemessen werden. Zudem erfordern diese Methoden meist keinen oder einen nur geringfügigen Stromfluss, so dass eine Überlastung der ausgangssignalverarbeitenden Komponenten aufgrund fehlerhafter Signale vermieden werden kann. Die Projektion auf ein bestimmtes Intervall bzw. auf einen bestimmten Wertebereich ermöglicht es darüber hinaus, die Ausgangssignale der unterschiedliche Eingangssignale mit denselben elektronischen bzw. informationsverarbeitenden Komponenten (Mikrocontrollern, etc.) zu verarbeiten. Weitere Baugruppen z.B. zur Erfassung unterschiedlicher Wertebereiche entfallen. Dies stellt sowohl einen Vorteil in Bezug auf Kosten als auch Wartung dar.

Die Konfiguration der zweipoligen Eingänge kann mindestens einmal bei Inbetriebnahme, nach jedem Neustart, in periodischen Abständen, permanent und/oder manuell durchgeführt werden.

Damit kann die Konfiguration der Eingänge mindestens einmal z.B. bei Inbetriebnahme eines Feldgeräts bzw. einer Anlage durchgeführt werden. Des Weiteren kann die Konfiguration nach Bedarf wiederholt werden, z.B. im Rahmen einer Wartung oder Überprüfung des Gerätes bzw. der Anlage. Sie kann auch ständig bzw. permanent erfolgen, so dass z.B. mögliche Fehler oder Störungen rasch erkannt werden können.

Ferner wird die Aufgabe gelöst durch ein Computerprogramm, das bei Ablauf auf einer Recheneinheit, einem Mikrocontroller, DSP, FPGA oder Computer oder auf einer Mehrzahl davon in einem Netzwerk das erfindungsgemäße Verfahren in einer seiner Ausgestaltungen ausführt.

Weiterhin wird die Aufgabe gelöst durch ein Computerprogramm mit Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Schließlich wird die Aufgabe gelöst durch ein moduliertes Datensignal, welches von einer Recheneinheit, einem Mikrocontroller, DSP, FPGA oder Computer oder von einer Mehrzahl davon in einem Netzwerk ausführbare Instruktionen zum Ausführen des erfindungsgemäßen Verfahrens in einer seiner Ausgestaltungen enthält.

Als System zum Ausführen des Verfahrens kommen sowohl ein Mikrocontroller, DSP, FPGA, *Stand-alone* Computer, Tablet oder Smartphone in Betracht, als auch ein Netzwerk von Mikrocontrollern, DSPs, FPGAs oder andere informationsverarbeitende Geräte, beispielsweise ein hausinternes, geschlossenes Netz z.B. als Teil eines Leitsystems einer verfahrenstechnischen Anlage, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen. Es umfasst eine Einrichtung, die derart ausgestaltet ist, dass sie das erfindungsgemäße Verfahren ausführen kann.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das erfindungsgemäße Verfahren in einer seiner Ausgestaltungen ausführen kann.

Des Weiteren wird die Aufgabe gelöst durch einen zweipoligen elektrischen Eingang, der sich nach dem erfindungsgemäßen Verfahren konfiguriert bzw. selbst an ein angelegtes Eingangssignal anpasst.

Ferner wird die Aufgabe gelöst durch ein (Feld-)Gerät mit mindestens einem zweipoligen elektrischen Eingang, der sich nach dem erfindungsgemäßen Verfahren konfiguriert bzw. selbst an ein angelegtes Eingangssignal anpasst.

Damit entfällt eine manuelle Konfiguration des Feldgeräts, da es sich über die Konfiguration ihrer Eingänge selbst bzw. automatisch an das mindestens eine Eingangssignal anpasst.

Ein erfindungsgemäßes Gerät kann ein Stellungsregler, ein Regler, ein Aktor, ein Ventil, ein Messgerät oder Sensor, eine Pumpe, ein Gateway, ein Funkadapter, und/oder ein anderer in ein Bussystem integrierbarer Busteilnehmer sein.

Die (Stellungs-)Regler, Aktoren oder Ventile können dabei Proportional- (P), Integral- (I) und/oder Differential- (D-)Glieder umfassen, wie z.B. bei einem PID-Regler. Sie können für den Auf/Zu- oder einen Dreipunktbetrieb genutzt werden, wobei Binäreingangssignale verwendet werden können. Für Temperatur- oder Differenztemperaturregelungen können Signale eines PT100- oder PT1000-Fühlers dienen, wobei insbesondere das Vierpolprinzip zur Bestimmung solcher Messwiderstände genutzt werden kann. Zur Regelung z.B. des Durchflusses durch ein Ventil kann das entsprechende Feldgerät (z.B. ein Stellventil) so eingestellt sein, dass es dem Spannungssignal eines Durchflussmessgeräts folgt, bis der gewünschte Wert erreicht und/oder eingestellt ist.

Die Aufgabe wird auch gelöst durch ein (Feld-)Gerät mit mindestens zwei zweipoligen elektrischen Eingängen, die sich nach dem erfindungsgemäßen Verfahren konfigurieren bzw. selbst an ein angelegtes Eingangssignal anpassen.

Die oft aufwendige manuelle Konfiguration von Feldgeräten mit mehr als einem Eingang wird dadurch erheblich einfacher und sicherer.

Ein weiteres Ausführungsbeispiel der Erfindung stellt ein Gerät mit mindestens zwei zweipoligen elektrischen Eingängen, die sich nach dem erfindungsgemäßen Verfahren konfigurieren bzw. selbst an ein angelegtes Eingangssignal anpassen, wobei das Gerät die Konfiguration der Eingänge erkennt und daraus eine Konfiguration und/oder Steuermechanismen des Geräts ableitet.

Derartige Geräte ermöglichen es mehrere Eingangssignale zu verarbeiten und bei der Steuerung des Feldgeräts zu berücksichtigen. Eine mögliche Anwendung ist zum Beispiel ein Stellventil, das für eine Differenztemperaturregelung genutzt wird.

Erfindungsgemäße (Feld-)Geräte mit mindestens zwei Eingängen können auch mit einem Multiplexer ausgestattet sein, der es ermöglicht, die mindestens zwei Eingänge nacheinander anzusteuern.

Elektronische Komponenten zum Messen bzw. der Auswertung von Eingangssignalen können auf diese Weise zur Verarbeitung mehrerer Eingangssignale verwendet werden, z.B. im Rahmen einer seriellen oder Multi-Thread-Abarbeitung.

Ein weiteres Ausführungsbeispiel der Erfindung stellt eine Anlage mit mindestens einem Gerät dar, das über mindestens einen zweipoligen Eingang verfügt, der sich nach dem erfindungsgemäßen Verfahren selbst konfiguriert.

Verfahrenstechnische Anlagen, in denen das erfindungsgemäße Verfahren zur Anwendung kommt und die mit entsprechenden zweipoligen Eingängen bzw. (Feld-)Geräten ausgestattet sind, können sich demnach vollständig selbst konfigurieren. Das erleichtert die Inbetriebnahme, Wartung und den Betrieb solcher Anlagen erheblich.

Eine solche Anlage kann zudem mit einer Steuerung ausgestattet sein, die die Konfiguration der Geräte bzw. der zweipoligen elektrischen Eingänge erkennt und daraus eine Konfiguration und/oder Steuermechanismen der Anlage ableitet.

Derartige Anlagen enthalten nicht nur smarte Komponenten (smarte Feldgeräte und Universaleingänge), sie werden durch die Kommunikation mit diesen Komponenten und eine entsprechende Selbstanpassung ebenfalls smart.

Weitere Einzelheiten und Merkmale ergeben sich aus der nachfolgenden Beschreibung von bevorzugten Ausführungsbeispielen in Verbindung mit den Figuren.

Die Ausführungsbeispiele sind in den Figuren schematisch Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: einen selbstadaptierenden zweipoligen Eingang;
- Fig. 2: ein Feldgerät mit einem selbstadaptierenden zweipoligen Eingang;
- Fig. 3: einen Ablaufplan des erfindungsgemäßen Verfahrens mit den Schnittstellen A und B;
- Fig. 4: eine mögliche Fortsetzung des Verfahrens gemäß Fig. 3an der Schnittstelle A;
- Fig. 5: eine mögliche Fortsetzung des Verfahrens gemäß Fig. 3 an der Schnittstelle B; und
- Fig. 6: weitere mögliche Verfahrensschritte zur Fortsetzung des Verfahrens gemäß Fig. 3 an der Schnittstelle B.

### Fig. 1

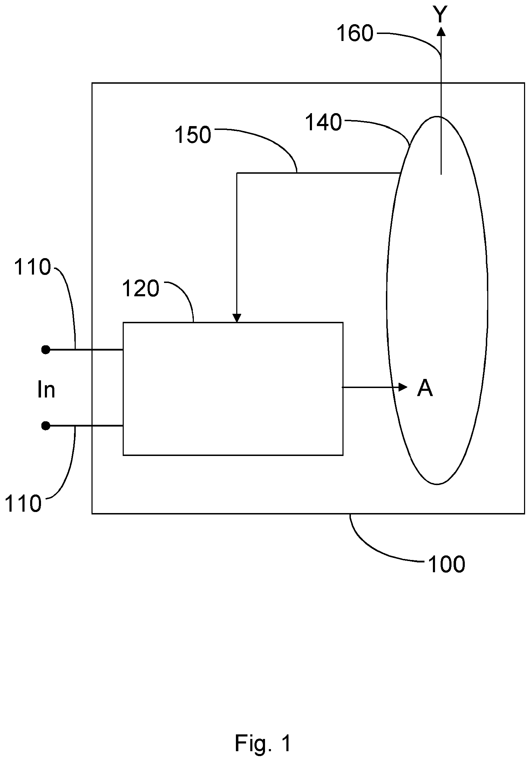

Fig. 1 zeigt einen zweipoligen Eingang 100 mit zwei Eingangspolen 110 zum Anlegen eines Eingangssignals In. Das Eingangssignal In wird mit den Eingangspolen 110 in eine Messvorrichtung 120 eingespeist. Die Messvorrichtung 120 verarbeitet das Eingangssignal In zu einem Ausgangssignal A. Das Ausgangssignal A wird anschließend von einem Mikrocontroller 140 verarbeitet. Der Mikrocontroller 140 übernimmt die Steuerung und Konfiguration des zweipoligen Eingangs 100 nach dem erfindungsgemäßen Verfahren. Er nutzt dazu das Ausgangssignal A und übermittelt mithilfe einer Steuerverbindung 150 Steuerbefehle an die Messvorrichtung 120.

Hat der Mikrocontroller die Quelle das Eingangssignals ermittelt, z.B. eine Stromquelle und/oder eine Spannungsquelle und/oder einen (Mess-)Widerstand und/oder einen Schalter bzw. Binärkontakt, sendet er einen Steuerbefehl an die Messvorrichtung, das Eingangssignal mit den entsprechenden Mitteln zu messen bzw. zu verarbeiten. Das Ausgangssignal A der Messvorrichtung 120 kann der Mikrocontroller 140 über die Verbindung 160 als Teil eines Ausgangssignals Y des Eingangs 100 weiterleiten. Dient das Eingangssignal In z.B. zur Energieversorgung eines Feldgeräts kann der Mikrocontroller 140 das Eingangssignal In ebenfalls über die Verbindung 160 weitergeben. Das Ausgangssignal Y kann auch noch weitere Informationen über das Eingangssignal, den zweipoligen Eingang und/oder die Umgebung des Eingangs (Zeitstempel, GPS-Daten, etc.) enthalten, um eine automatische Konfiguration von (Feld-)Geräten bzw. verfahrenstechnischer Anlagen zu ermöglichen oder wenigstens zu begünstigen.

Die Eingangspole 110 sind in diesem Ausführungsbeispiel Klemmkontakte. Die Pole eines erfindungsgemäßen Eingangs können aber auch als Buchsen ausgeführt sein. Bei Feldgeräten mit mehreren Eingängen können die Pole in einer mehrpoligen Steckverbindung zusammengefasst sein.

Die Messvorrichtung 120 enthält Mittel zum Messen von elektrischen Spannungen, Strömen und Widerständen. Sie können vom Mikrocontroller 140 zur Durchführung des erfindungsgemäßen Verfahrens über die Steuerverbindung 150 einzeln ein- oder abgeschaltet bzw. aktiviert werden. Die Anpassung des Eingangs 100 erfolgt ebenfalls über die Steuerverbindung 150 und besteht zunächst darin, die Messmittel der Messvorrichtung 120 an das ermittelte Eingangssignal In anzupassen.

Der Mikrocontroller 140 führt das erfindungsgemäße Verfahren zur Konfiguration des zweipoligen Eingangs 100 durch, indem er das Ausgangssignal A der Messvorrichtung 120 verarbeitet. Das Ausgangssignal A kann sich dabei im Verlauf des Verfahrens ändern, v.a. wenn die Mittel zum Messen des Eingangssignals In umgeschaltet werden, die Strom- oder Spannungsquelle ein- oder ausgeschaltet oder ein elektrischer Schalter geöffnet oder geschlossen wird. Diese Änderungen sind ein wesentlicher Bestandteil des Verfahrens zur Konfiguration des Eingangs 100. Sie können zur Durchführung einzelner Verfahrensschritte gespeichert bzw. aufgezeichnet werden. Der Mikrocontroller 140 verfügt dazu über Mittel zum Speichern der Messwerte, die an unterschiedlichen Stellen des Verfahrens gewonnen bzw. ausgewertet werden.

Nachdem der Mikrocontroller das Eingangssignal identifiziert und den Eingang daran angepasst hat, kann er das Ausgangssignal A der Messvorrichtung 120 als Teil des Ausgangssignal Y des Eingangs 100 über die Verbindung 160 weiterleiten. Es kann an dieser Stelle abgegriffen und von anderen Geräten weiterverarbeitet werden. Das Ausgangssignal Y kann lediglich aus dem Ausgangssignal A bestehen. Es kann bei Bedarf mit Informationen über das Eingangssignal In angereichert sein, die z.B. bei der Durchführung des erfindungsgemäßen Verfahrens im Mikrocontroller erhoben und abgespeichert wurden. Es kann ebenfalls weitere Informationen enthalten, die vom Mikrocontroller erhoben werden oder darin abgespeichert sind, z.B. Informationen über die in der Anlage verwendeten Quellen von Eingangssignalen bzw. die zugehörigen standardisierten Wertebereiche. Das Eingangssignal In kann ebenfalls Teil des Ausgangssignals Y sein und über die Verbindung 160 übertragen werden, z.B. zur Energieversorgung von Feldgeräten oder zur direkten Übertragung von Messwerten der an den Eingang 100 angeschlossenen Messgeräte/-sensoren.

### Fig. 2

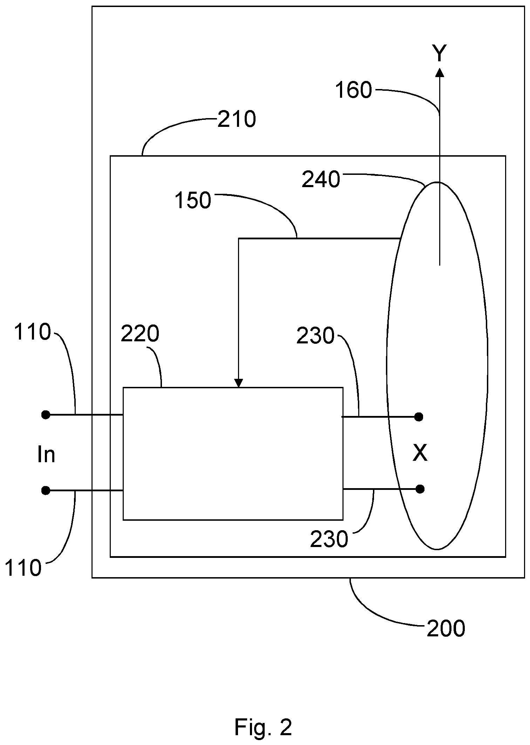

Fig. 2 zeigt ein Feldgerät 200 mit einem zweipoligen Eingang 210, bei dem die Messvorrichtung als Zweitor bzw. Vierpol 220 ausgeführt ist. Der Vierpol 220 verfügt über zwei Ausgangspole 230, die das Ausgangssignal X in den Mikrocontroller 240 einspeisen. Der Mikrokontroller 240 passt dem erfindungsgemäßen Verfahren folgend den Eingang 210 an das Eingangssignal In an und leitet das Ausgangssignal Y an das Feldgerät 200 über die Verbindung 160 weiter.

In diesem Ausführungsbeispiel sind die Messmittel des Vierpols 220 derart ausgestaltet, dass das Ausgangssignal X ein Spannungssignal darstellt, unabhängig davon ob die Messvorrichtung bzw. der Vierpol 220 zum Messen einer Spannung, eines Stroms oder eines Widerstands eingestellt ist. Zudem liegt der Wert des Ausgangssignals X in einem festgelegten Bereich, in diesem Fall zwischen 130 mV und 2,46 V. Letzteres gilt allerdings nur für den Fall, dass das Eingangssignal mit den dazu passenden Mitteln gemessen wird. Ein Stromsignal, das mit den Mitteln zum Messen einer elektrischen Spannung gemessen wird, kann Messwerte außerhalb dieses Wertebereichs liefern.

Das Ausgangssignal X wird anschließend analog-digital-gewandelt und vom Mikrocontroller 240 weiterverarbeitet. Die digitalisierten Ausgangsspannungen entsprechen den jeweils gemessenen Eingangsspannungen oder -strömen oder Widerstandswerten.

### Fig. 3

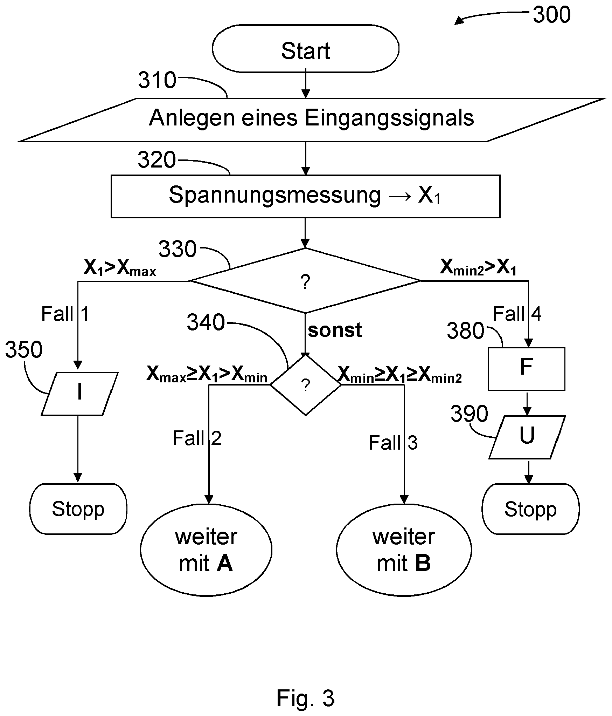

Fig. 3 zeigt ein Ausführungsbeispiel eines erfindungsgemäßen Verfahrens 300 zur Konfiguration eines zweipoligen Eingangs 210. Das Verfahren beginnt mit dem Anlegen 310 eines Eingangssignals In an den zweipoligen Eingang 210. Daraufhin führt die Steuerung des Eingangs 210, d.h. der Mikrocontroller 240, eine erste Spannungsmessung 320 mithilfe der Messvorrichtung 220 durch. Das Ergebnis der Messung liegt dem Mikrocontroller 240 in Form eines Ausgangssignals X vor. Der entsprechende Wert wird in der Variablen X₁ gespeichert.

In einem zweiten Schritt führt der Mikrocontroller 240 eine Prüfung 330 des Ergebnisses X₁ der ersten Spannungsmessung 320 durch.

### Fall 1 :

Liegt das Ergebnis X₁ der ersten Spannungsmessung 320 über einer Maximalspannung, die durch die Messvorrichtung auf Xₘₐₓ = 2,46 V abgebildet wird, d.h. ist also X₁ > Xₘₐₓ, kann das Signal nicht von einer für die Anwendung des Feldgeräts bestimmten Spannungsquelle stammen. Die Mittel zum Messen einer elektrischen Spannung sind schließlich so ausgelegt, dass in diesem Fall X gelten X₁ ≤ Xₘₐₓ würde. Da aber X₁ > Xₘₐₓ ist, muss das gemessene Eingangssignal von einer Stromquelle stammen. Der Mikrocontroller 240 passt nach diesem Ergebnis der Prüfung 330 den Eingang 210 in Schritt 350 an das Stromsignal an, indem er über die Steuerverbindung 150 die Mittel zum Messen eines elektrischen Stroms einschaltet.

Es ist auch möglich, dass die Stromquelle zur Energieversorgung des Feldgeräts 200 dient. Dementsprechend leitet der Mikrocontroller 240 nicht das Ausgangssignal X sondern das Eingangssignal In an das Feldgerät 200 weiter. Auch dies ist Teil des Verfahrensschritts 350.

Liegt das Ausgangssignal nicht über der vorgegebenen Maximalspannung, d.h. X₁ ≤ Xₘₐₓ, und ist positiv, d.h. X₁ ≥ 130 mV (die Messvorrichtung bildet in diesem Beispiel eine Spannung von 0 V auf den Wert X = 130 mV ab), führt der Mikrocontroller eine weitere Prüfung 340 durch.

### Fall 2:

Ergibt die Prüfung 340, dass das Ausgangssignal größer als eine Minimalspannung ist, die durch die Messvorrichtung z.B. auf Xₘᵢₙ = 130,4 mV abgebildet wird, und kleiner oder gleich der Maximalspannung Xₘₐₓ ist, d.h. Xₘₐₓ≥ X₁ > Xₘᵢₙ, setzt der Mikrocontroller das Verfahren an der Schnittstelle A fort, um zu ermitteln, ob das Eingangssignal In von einer Strom- oder Spannungsquelle stammt.

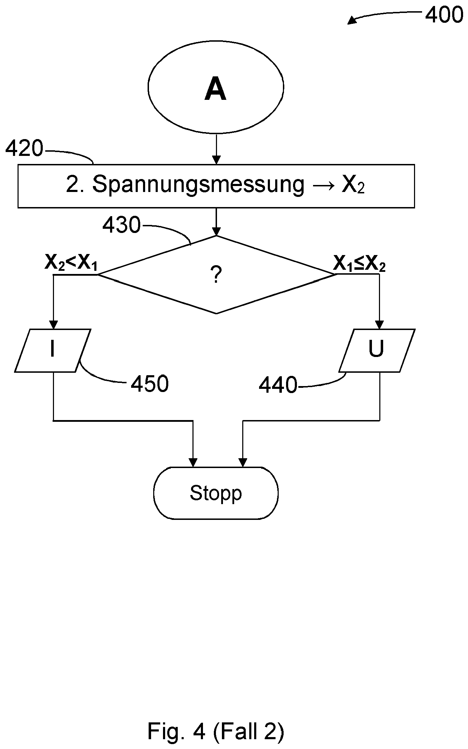

Ein Ausführungsbeispiel für die weiteren Verfahrensschritte an der Schnittstelle A sind Fig. 4 bzw. deren Beschreibung zu entnehmen.

### Fall 3:

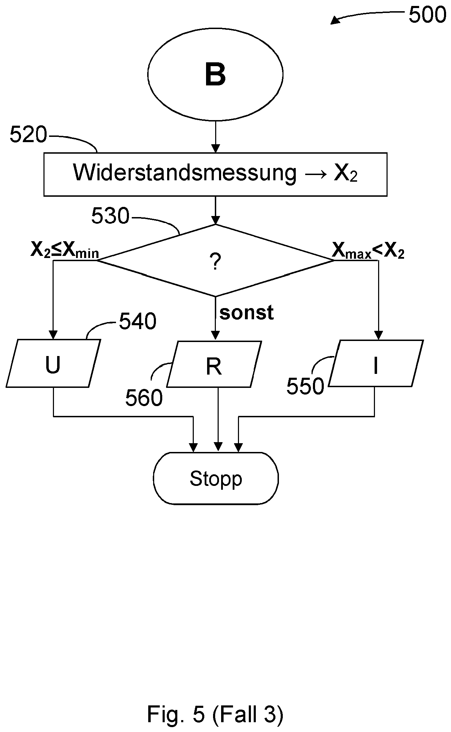

Falls Xₘᵢₙ ≥ X₁ ≥ Xₘᵢₙ₂ gilt, wobei z.B. Xₘᵢₙ₂ = 129,5 mV, führt der Mikrocontroller das Verfahren an der Schnittstelle B fort. Ein Ausführungsbeispiel für weitere Verfahrensschritte an der Schnittstelle B sind Fig. 5 bzw. deren Beschreibung zu entnehmen.

Die Schritte gemäß Fig. 5 dienen zur Unterscheidung von drei Quellen für Eingangssignale: elektrische (Mess-)Widerstände, elektrische Strom- und Spannungsquellen.

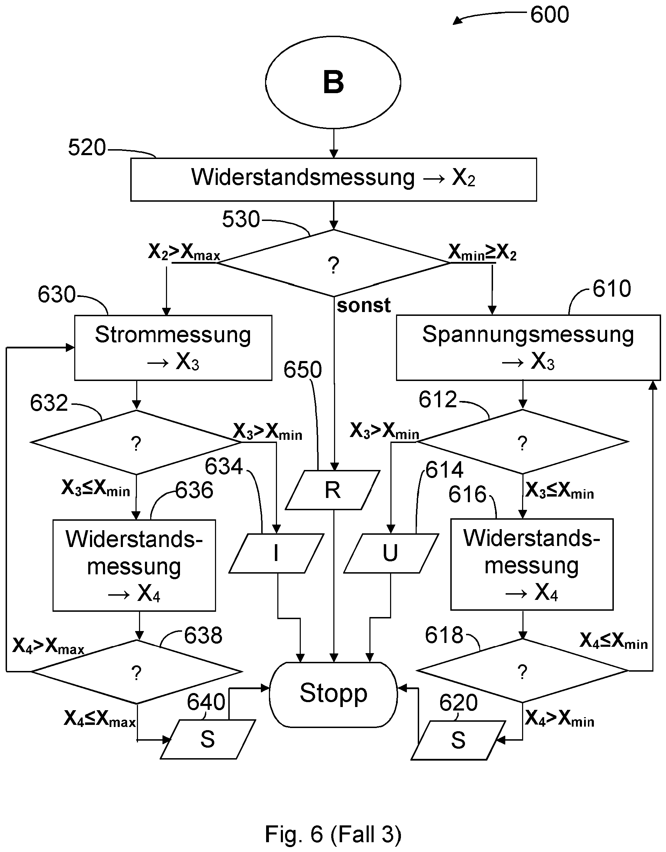

Für eine zusätzliche Unterscheidung von Eingangssignalen, die von Binärkontakten bzw. Schaltern stammen, können die weiteren Verfahrensschritte an der Schnittstelle B, die in Fig. 6 gezeigt sind, herangezogen werden.

### Fall 4:

Stellt der Mikrocontroller 240 bei der Prüfung 330 fest, dass der Wert des Ausgangssignals X negativ ist, ist das Eingangssignal In fehlerhaft an den Eingang 210 angeschlossen. In diesem Fall versetzt 380 der Mikrocontroller den Eingang in einen Fehlerzustand und aktiviert 390 in der Messvorrichtung 220 die Mittel zum Messen einer Spannung. Sobald der Fehler behoben ist (z.B. indem das Signal umgepolt wurde), kann das Verfahren 300 wieder neu gestartet werden.

### Fig. 4 (Fall 2)

Fig. 4 zeigt weitere Verfahrensschritte 400 an der Schnittstelle A des Ausführungsbeispiels 300. Das Verfahren 300 wird an der Schnittstelle A mit einer zweiten Spannungsmessung 420 fortgesetzt, und zwar mit Hilfe eines kleineren Innenwiderstands als bei der ersten Spannungsmessung 320. Das Ergebnis der zweiten Spannungsmessung 420 wird von der Messvorrichtung 220 als Ausgangssignal X an den Mikrocontroller 240 über die Ausgangspole 230 weitergeleitet. Der entsprechende Wert wird in der Variablen X₂ hinterlegt.

In einem nächsten Schritt führt der Mikrocontroller 240 eine Prüfung 430 durch und bestimmt, ob das Ergebnis X₁ der ersten Spannungsmessung 320 kleiner oder gleich dem Ergebnis X₂ der zweiten Spannungsmessung 420 ist. Ist das der Fall, muss das Eingangssignal von einer Spannungsquelle stammen. Der Mikrocontroller 240 passt nach diesem Ergebnis der Prüfung 430 den Eingang 210 in Schritt 440 an das Spannungssignal an, indem er über die Steuerverbindung 150 die Mittel zum Messen einer elektrischen Spannung einschaltet. In diesem Ausführungsbeispiel dient die Spannungsquelle als Signalgeber für das Feldgerät 200. Dementsprechend leitet der Mikrocontroller 240 das Ausgangssignal X an das Feldgerät 200 weiter. Auch dies ist Teil des Verfahrensschritts 440.

Ergibt die Prüfung 430, dass X₂ < X₁, muss das Eingangssignal von einer Stromquelle stammen. Der Mikrocontroller 240 passt nach diesem Ergebnis der Prüfung 430 den Eingang 210 in Schritt 450 an das Stromsignal an, indem er über die Steuerverbindung 150 die Mittel zum Messen eines elektrischen Stroms einschaltet.

Es ist auch möglich, dass die Stromquelle zur Energieversorgung des Feldgeräts 200 dient. Dementsprechend leitet der Mikrocontroller 240 nicht das Ausgangssignal X sondern das Eingangssignal In an das Feldgerät 200 weiter. Auch dies ist Teil des Verfahrensschritts 450.

### Fig. 5 (Fall 3)

Fig. 5 zeigt weitere Verfahrensschritte 500 an der Schnittstelle B des Ausführungsbeispiels 300 zur Unterscheidung von elektrischen Widerständen und nicht eingeschalteten Stromund Spannungsquellen (Schalter sind in Fig. 5 ausgeschlossen).

Das Verfahren 300 wird an der Schnittstelle B mit einer Widerstandsmessung 520 fortgesetzt. Das Ergebnis der Widerstandsmessung wird von der Messvorrichtung 220 als Ausgangssignal X an den Mikrocontroller 240 über die Ausgangspole 230 weitergeleitet. Es liegt dem Mikrocontroller in Form eines Spannungssignals vor. Der entsprechende Wert wird in der Variablen X₂ hinterlegt.

In einem nächsten Schritt führt der Mikrocontroller 240 eine Prüfung 530 durch und bestimmt, ob das Ergebnis X₂ der Widerstandsmessung 520 kleiner oder gleich einem ersten Schwellwert ist, in diesem Ausführungsbeispiel X₂ ≤ Xₘᵢₙ, oder ob X₂ größer als ein zweiter Schwellwert ist, der größer als der erste Schwellwert ist, in diesem Ausführungsbeispiel X₂ > Xₘₐₓ.

Ist X₂ ≤ Xₘᵢₙ, muss das Eingangssignal In von einer Spannungsquelle stammen, deren Signal nicht von 0 V unterschieden werden kann. Der Mikrocontroller 240 passt nach diesem Ergebnis der Prüfung 530 den Eingang 210 in Schritt 540 an das Spannungssignal an, indem er über die Steuerverbindung 150 die Mittel zum Messen einer elektrischen Spannung einschaltet. In diesem Ausführungsbeispiel dient die Spannungsquelle als Signalgeber für das Feldgerät 200. Dementsprechend leitet der Mikrocontroller 240 das Ausgangssignal X an das Feldgerät 200 weiter. Auch dies ist Teil des Verfahrensschritts 540.

Ergibt die Prüfung 530, dass X₂ > Xₘₐₓ ist, kann das Eingangssignal In nur von einer nicht eingeschalteten Stromquelle stammen. Der Mikrocontroller 240 passt nach diesem Ergebnis der Prüfung 530 den Eingang 210 in Schritt 550 an das Stromsignal an, indem er über die Steuerverbindung 150 die Mittel zum Messen eines elektrischen Stroms einschaltet.

Es ist auch möglich, dass die Stromquelle zur Energieversorgung des Feldgeräts 200 dient. Dementsprechend leitet der Mikrocontroller 240 nicht das Ausgangssignal X sondern das Eingangssignal In an das Feldgerät 200 weiter. Auch dies ist Teil des Verfahrensschritts 550.

Ist Xₘᵢₙ < X₂ ≤ Xₘₐₓ, kann das Eingangssignal In nur von einem elektrischen Widerstand stammen. Der Mikrocontroller 240 passt nach diesem Ergebnis der Prüfung 530 den Eingang 210 in Schritt 560 an das Signal des elektrischen Widerstands an, indem er über die Steuerverbindung 150 die Mittel zum Messen eines elektrischen Widerstands, die in diesem Ausführungsbeispiel nach dem Vierpolprinzip arbeiten, einschaltet bzw. eingeschaltet lässt. In diesem Fall wird das Widerstandssignal z.B. für eine temperaturabhängige Regelung des Feldgeräts 200 genutzt. Dementsprechend leitet der Mikrocontroller 240 das Ausgangssignal X an das Feldgerät 200 über die Verbindung 160 weiter.

Das Verfahren hat an diesem Punkt alle möglichen Szenarien durchlaufen. Der Mikrocontroller 240 des Feldgeräts 200 hat ermittelt, von welcher Quelle das Eingangssignal stammt. Zudem hat er den zweipoligen Eingang 210 an das Eingangssignal angepasst und die entsprechenden Maßnahmen getroffen, um z.B. die Energieversorgung des Feldgeräts 200 sicher zu stellen und/oder die Signale angeschlossener Mess- oder Steuergeräte zu verarbeiten.

### Fig. 6 (Fall 3)

Fig. 6 zeigt weitere Verfahrensschritte 600 an der Schnittstelle B des Ausführungsbeispiels 300 zur Unterscheidung von elektrischen Schaltern, Widerständen und nicht eingeschalteten Strom- und Spannungsquellen. Das Verfahren 300 wird an der Schnittstelle B mit einer Widerstandsmessung 520 fortgesetzt. Das Ergebnis der Widerstandsmessung wird von der Messvorrichtung 220 als Ausgangssignal X an den Mikrocontroller 240 über die Ausgangspole 230 weitergeleitet. Es liegt in Form eines Spannungssignals vor. Der entsprechende Wert wird in der Variablen X₂ hinterlegt.

In einem nächsten Schritt führt der Mikrocontroller 240 eine Prüfung 530 durch und bestimmt, ob das Ergebnis X₂ der Widerstandsmessung 520 kleiner oder gleich einem ersten Schwellwert, in diesem Ausführungsbeispiel Xₘᵢₙ, oder ob X₂ größer als ein zweiter Schwellwert ist, der größer als der erste Schwellwert ist, in diesem Ausführungsbeispiel X₂ > Xₘₐₓ.

Ist X₂ ≤ Xₘᵢₙ,, muss das Eingangssignal In von einer Spannungsquelle, deren Signal nicht von 0 V unterschieden werden kann, oder einem geschlossenen Schalter stammen. Der Mikrocontroller 240 führt nach diesem Ergebnis der Prüfung 530 zur weiteren Unterscheidung der Signalquelle eine Spannungsmessung 610 durch. Das entsprechende Ausgangssignal X wird in der Variable X₃ hinterlegt. Im Anschluss an die Spannungsmessung 610 führt der Mikrocontroller 240 eine Prüfung 612 durch und bestimmt, ob das Ergebnis X₃ der Spannungsmessung 610 größer als eine Minimalspannung ist, d.h. ob X₃ > Xₘᵢₙ. Ist das der Fall, muss das Eingangssignal von einer Spannungsquelle stammen, die in der Zeit, die seit der ersten Spannungsmessung 320 vergangen ist, eingeschaltet wurde. Der Mikrocontroller 240 passt nach diesem Ergebnis der Prüfung 612 den Eingang 210 in Schritt 614 an das Spannungssignal an, indem er über die Steuerverbindung 150 die Mittel zum Messen einer elektrischen Spannung einschaltet bzw. eingeschaltet lässt.

In vielen Fällen dient die Spannungsquelle als Signalgeber für das Feldgerät 200. Dementsprechend leitet der Mikrocontroller 240 das Ausgangssignal X an das Feldgerät 200 weiter. Auch dies ist Teil des Verfahrensschritts 614.

Ergibt die Prüfung 612, dass das Ergebnis X₃ der Spannungsmessung 610 kleiner oder gleich einer Minimalspannung ist, d.h. X₃ ≤ Xₘᵢₙ ist, kann das Eingangssignal In weiterhin von einer nicht eingeschalteten Spannungsquelle oder einem geschlossenen Schalter stammen. Der Mikrocontroller 240 führt nach diesem Ergebnis der Prüfung 612 zur weiteren Unterscheidung der Signalquelle eine Widerstandsmessung 616 durch. Das dieser Messung entsprechende Ausgangssignal X wird in der Variable X₄ hinterlegt.

Im Anschluss daran führt der Mikrocontroller 240 eine Prüfung 618 durch und bestimmt, ob das Ergebnis X₄ der Widerstandsmessung 616 größer als ein Schwellwert ist, d.h. X₄ > Xₘᵢₙ. Ist das der Fall, muss das Eingangssignal von einem Schalter stammen, der in der Zeit, die seit der Widerstandsmessung 520 vergangen ist, geöffnet wurde. Der Mikrocontroller 240 passt nach diesem Ergebnis der Prüfung 618 den Eingang 210 in Schritt 620 an das Schaltersignal an, indem er über die Steuerverbindung 150 die Mittel zum Messen eines Schaltersignals einschaltet bzw. eingeschaltet lässt. In diesem Ausführungsbeispiel dient der Schalter als Signalgeber für das Feldgerät 200. Dementsprechend wandelt der Mikrocontroller 240 das Ausgangssignal X in ein digitales 16-Bit-Signal um, das er an das Feldgerät 200 weiterleitet. Auch dies ist Teil des Verfahrensschritts 620.

Ergibt die Prüfung 618, dass das Ergebnis X₄ der Widerstandsmessung 616 kleiner oder gleich einem Schwellwert ist, d.h. in diesem Ausführungsbeispiel X₄ ≤ Xₘᵢₙ, kann das Eingangssignal In weiterhin von einer nicht eingeschalteten Spannungsquelle oder einem geschlossenen Schalter stammen. Der Mikrocontroller 240 setzt dementsprechend das Verfahren mit der Spannungsmessung 610 fort. Die sich ergebende Schleife, die die Spannungsmessung 610, die Prüfung 612, die Widerstandsmessung 616 und die Prüfung 618 in dieser Reihenfolge umfasst, wird so lange durchlaufen, bis eine der Prüfungen 612 oder 616 ein Ergebnis liefert, das es erlaubt, das Eingangssignal In eindeutig einer Signalquelle zuzuordnen.

Ergibt die Prüfung 530, dass das Ergebnis X₂ der Widerstandsmessung 520 größer als ein Schwellwert ist, d.h. X₂ > Xₘₐₓ, muss das Eingangssignal In von einer Stromquelle oder einem geöffneten Schalter stammen. Der Mikrocontroller 240 führt nach diesem Ergebnis der Prüfung 530 zur weiteren Unterscheidung der Signalquelle eine Strommessung 630 durch. Das dieser Messung entsprechende Ausgangssignal X wird in der Variable X₃ hinterlegt. Im Anschluss an die Strommessung 630 führt der Mikrocontroller 240 eine Prüfung 632 durch und bestimmt, ob das Ergebnis X₃ der Strommessung 630 größer als ein Minimalwert ist, d.h. X₃>Xₘᵢₙ. Ist das der Fall, muss das Eingangssignal von einer Stromquelle stammen, die in der Zeit, die seit der ersten Spannungsmessung 320 vergangen ist, eingeschaltet wurde. Der Mikrocontroller 240 passt nach diesem Ergebnis der Prüfung 632 den Eingang 210 in Schritt 634 an das Stromsignal an, indem er über die Steuerverbindung 150 die Mittel zum Messen eines elektrischen Stroms einschaltet bzw. eingeschaltet lässt.

Es ist auch möglich, dass die Stromquelle zur Energieversorgung des Feldgeräts 200 dient. Dementsprechend leitet der Mikrocontroller 240 nicht das Ausgangssignal X sondern das Eingangssignal In an das Feldgerät 200 weiter. Auch dies ist Teil des Verfahrensschritts 634.

Ergibt die Prüfung 632, dass das Ergebnis X₃ der Strommessung 630 kleiner oder gleich einer Minimalspannung ist, d.h. X₃ ≤ Xₘᵢₙ, kann das Eingangssignal In weiterhin von einer nicht eingeschalteten Stromquelle oder einem geöffneten Schalter stammen.

Der Mikrocontroller 240 führt nach diesem Ergebnis der Prüfung 632 zur weiteren Unterscheidung der Signalquelle eine Widerstandsmessung 636 durch. Das dieser Messung entsprechende Ausgangssignal X wird in der Variable X₄ hinterlegt.

Im Anschluss an die Widerstandsmessung 636 führt der Mikrocontroller 240 eine Prüfung 638 durch und bestimmt, ob das Ergebnis X₄ der Widerstandsmessung 636 kleiner oder gleich einem Schwellwert ist, d.h. X₄ ≤ Xₘₐₓ. Ist das der Fall, muss das Eingangssignal von einem Schalter stammen, der in der Zeit, die seit der Widerstandsmessung 520 vergangen ist, geschlossen wurde. Der Mikrocontroller 240 passt nach diesem Ergebnis der Prüfung 638 den Eingang 210 in Schritt 640 an das Schaltersignal an, indem er über die Steuerverbindung 150 die Mittel zum Messen eines Schaltersignals einschaltet bzw. eingeschaltet lässt. In diesem Ausführungsbeispiel dient der Schalter als Signalgeber für das Feldgerät 200. Dementsprechend wandelt der Mikrocontroller 240 das Ausgangssignal X in ein digitales 16-Bit-Signal um, das er an das Feldgerät 200 weiterleitet. Auch dies ist Teil des Verfahrensschritts 640.

Ergibt die Prüfung 638, dass das Ergebnis X₄ der Widerstandsmessung 636 größer als ein Schwellwert ist, d.h. X₄ > Xₘₐₓ, kann das Eingangssignal In weiterhin von einer nicht eingeschalteten Stromquelle oder einem geöffneten Schalter stammen. Der Mikrocontroller 240 setzt dementsprechend das Verfahren mit der Strommessung 630 fort. Die sich ergebende Schleife, die die Strommessung 630, die Prüfung 632, die Widerstandsmessung 636 und die Prüfung 638 in dieser Reihenfolge umfasst, wird so lange durchlaufen, bis eine der Prüfungen 632 oder 636 ein Ergebnis liefert, das es erlaubt, das Eingangssignal In eindeutig einer Signalquelle zuzuordnen.

Ergibt die Prüfung 530, dass Xₘₐₓ ≥ X₂ > Xₘᵢₙ, kann das Eingangssignal eindeutig einem elektrischen Widerstand zugeordnet werden. Der Mikrocontroller 240 passt nach diesem Ergebnis der Prüfung 530 den Eingang 210 in Schritt 650 an das Widerstandssignal an, indem er über die Steuerverbindung 150 die Mittel zum Messen eines elektrischen Widerstands einschaltet bzw. eingeschaltet lässt. In diesem Ausführungsbeispiel wird das Widerstandssignal für eine temperaturabhängige Regelung des Feldgeräts 200 genutzt. Dementsprechend wandelt der Mikrocontroller 240 das Ausgangssignal X mithilfe einer Kaskade von Fensterkomparatoren in ein digitales 16-Bit-Signal um und leitet dieses an das Feldgerät 200 über die Verbindung 160 weiter.

Das Verfahren hat an diesem Punkt alle möglichen Szenarien durchlaufen. Der Mikrocontroller 240 des Feldgeräts 200 hat ermittelt, von welcher Quelle das Eingangssignal stammt. Zudem hat er den zweipoligen Eingang 210 an das Eingangssignal angepasst und die entsprechenden Maßnahmen getroffen, um z.B. die Energieversorgung des Feldgeräts 200 sicher zu stellen und/oder die Signale angeschlossener Mess- oder Steuergeräte (z.B. Binärkontakte bzw. Schalter) zu verarbeiten.

Die beschriebenen Schleifen zur Unterscheidung von nicht eingeschalteten Strom-/Spannungsquellen von geöffneten/geschlossenen Schaltern bzw. Binärkontakten können periodisch z.B. mit einer Frequenz von 50 ms durchlaufen werden. Die Konfiguration des Eingangs erfolgt damit auf Zeitskalen, die wesentlich kürzer sind als die notwendigen manuellen Schritte zur Inbetriebnahme eines Feldgeräts oder einer verfahrenstechnischen Anlage.

### Glossar

### Binäres Eingangssignal

Ein binäres Eingangssignal stammt von einem elektrischen Schalter oder Binärkontakt. Ein Schalter oder Binärkontakt kann zwei Zustände annehmen: einen geöffneten Zustand, der einem sehr hohen Widerstand entspricht, und einen geschlossenen Zustand, der einem sehr kleinen Widerstand entspricht.

### Eingangssignal

Ein Eingangssignal kann eine elektrische Spannung einer Spannungsquelle oder ein elektrischer Strom einer Stromquelle sein. Eingangssignale können auch von Widerständen, Schaltern oder Binärkontakten erzeugt werden. Sie können sowohl analoger als auch digitaler Natur sein.

### Feldgerät

Ein Feldgerät ist eine technische Einrichtung im Bereich der Automatisierungstechnik, die mit einem Produktionsprozess in direkter Beziehung steht. "Feld" bezeichnet in der Automatisierungstechnik den Bereich außerhalb von Schaltschränken bzw. Leitwarten. Feldgeräte können somit sowohl Aktoren (Stellglieder, Ventile etc.) als auch Sensoren (z.B. Messumformer) in der Fabrik- und Prozessautomation sein.

### Universaleingang

Ein Universaleingang ist ein zweipoliger Eingang, der Eingangssignale unterschiedlicher Quellen verarbeiten kann, z.B. von Spannungs- oder Stromquellen, Widerstandsmessgeräten, Schaltern oder Binärkontakten.

### Bezugszeichen

- 100: Zweipoliger Eingang
- 110: Eingangspol
- 120: Messvorrichtung
- 140: Mikrocontroller
- 150: Steuerverbindung
- 160: Verbindung
- In: Eingangssignal
- A: Ausgangssignal der Messvorrichtung 120
- Y: Ausgangssignal des zweipoligen Eingangs 100

- 200: Feldgerät mit einem zweipoligen Eingang
- 210: Zweipoliger Eingang
- 220: Vierpol
- 230: Ausgangspol
- 240: Mikrocontroller
- X: Ausgangssignal des Vierpols 220

- 300: Verfahren zur Konfiguration eines zweipoligen Eingangs 210
- 310: Anlegen eines Eingangssignals
- 320: Erste Spannungsmessung
- 330: Prüfung
- 340: Prüfung
- 350: Stromquelle erkannt
- 380: Fehler (Verpolung) erkannt
- 390: Aktivieren der Mittel zum Messen einer Spannung

- 400: weitere Verfahrensschritte nach der Schnittstelle A
- 420: Strommessung
- 430: Prüfung
- 440: Spannungsquelle erkannt
- 450: Stromquelle erkannt

- 500: weitere Verfahrensschritte nach der Schnittstelle B
- 520: Widerstandsmessung
- 530: Prüfung
- 540: Spannungsquelle erkannt
- 550: Stromquelle erkannt
- 560: (Mess-)Widerstand erkannt

- 600: weitere Verfahrensschritte nach der Schnittstelle B
- 610: Spannungsmessung
- 612: Prüfung
- 614: Spannungsquelle erkannt
- 616: Widerstandsmessung
- 618: Prüfung
- 620: Schalter erkannt
- 630: Strommessung
- 632: Prüfung
- 634: Stromquelle erkannt
- 636: Widerstandsmessung
- 638: Prüfung
- 640: Schalter erkannt
- 650: Widerstand erkannt

### zitierte Literatur

### zitierte Patentliteratur

DE 10 2014 111 758 A1
DE 10 2017 200 134 A1
DE 20 2016 008 525 U1
DE 10 2004 040 282 A1
DE 10 2015 114 442 A1
EP 3 141 971 A1

## Patentansprüche

1. Verfahren (300) zur Konfiguration eines zweipoligen elektrischen Eingangs (100; 210),
1.1 wobei der elektrische Eingang (100; 210) zumindest mit den folgenden Mitteln ausgestattet wird:
1.1.1 mit Mitteln zum Messen einer elektrischen Spannung und eines elektrischen Stroms an dem zweipoligen Eingang (100; 210); und
1.1.2 mit einer Steuerung (140; 240) zum Steuern der Messmittel;
wobei das Verfahren (300) die folgenden Schritte umfasst
1.2 Anlegen (310) eines elektrischen Eingangssignals (In) an den zweipoligen elektrischen Eingang (100; 210);
1.3 die Steuerung (140; 240) ermittelt, ob das Eingangssignal (In) von einer elektrischen Spannungsquelle oder von einer elektrischen Stromquelle oder von einem elektrischen Widerstand oder von einem elektrischen Schalter stammt;
1.4 wozu mit Hilfe der Steuerung (140; 240) mindestens eine Messung (320; 420; 520; 610; 616, 630, 636) an dem zweipoligen Eingang (100; 210) mit Hilfe der Messmittel durchgeführt wird;
1.5 Anpassen (350; 440, 450; 540; 550; 560; 614, 620, 634, 640) des zweipoligen elektrischen Eingangs (100; 210) an die ermittelte Quelle des Eingangssignals (In);
**dadurch gekennzeichnet,**
1.6 dass die Steuerung (140; 240) in einem ersten Schritt nach dem Anlegen (310) eines elektrischen Eingangssignals (In) an den zweipoligen elektrischen Eingang (100; 210) mit den Mitteln zum Messen einer elektrischen Spannung eine erste Spannungsmessung (320) durchführt;
1.7 dass die Steuerung (140; 240) in einem zweiten Schritt das Ergebnis der ersten Spannungsmessung (320) dahingehend prüft (330, 340), ob es größer als eine positive Minimalspannung und kleiner oder gleich einer Maximalspannung ist, die größer als die Minimalspannung ist;
1.8 dass die Steuerung (140; 240) bei einem positiven Ergebnis der Prüfung in Schritt 1.7 in einem dritten Schritt mit den Mitteln zum Messen einer elektrischen Spannung eine zweite Spannungsmessung (420) durchführt;
1.8.1 wobei für die zweite Spannungsmessung (420) ein Widerstand verwendet wird, der kleiner ist als ein für die erste Spannungsmessung verwendeter Widerstand;
1.9 dass die Steuerung (140; 240) in einem vierten Schritt das Ergebnis der zweiten Spannungsmessung (420) dahingehend prüft (430), ob es größer oder gleich dem Ergebnis der ersten Spannungsmessung (320) ist;
1.10 woraufhin die Steuerung (140; 240) bei einem negativen Ergebnis der Prüfung in Schritt 1.9 in einem fünften Schritt den zweipoligen elektrischen Eingang (100; 210) an das Eingangssignal (In) anpasst (350; 450; 550; 634), indem die Steuerung (140; 240) die Mittel zum Messen eines elektrischen Stroms einschaltet und/oder eingeschaltet lässt; oder
1.11 woraufhin die Steuerung (140; 240) bei einem positiven Ergebnis der Prüfung in Schritt 1.9 in einem fünften Schritt den zweipoligen elektrischen Eingang (100; 210) an das Eingangssignal (In) anpasst (440; 540; 614), indem die Steuerung (140; 240) die Mittel zum Messen einer elektrischen Spannung einschaltet.

2. Verfahren (300) zur Konfiguration eines zweipoligen elektrischen Eingangs (100; 210),
2.1 wobei der elektrische Eingang (100; 210) zumindest mit den folgenden Mitteln ausgestattet wird:
2.1.1 mit Mitteln zum Messen einer elektrischen Spannung und eines elektrischen Stroms und eines elektrischen Widerstands an dem zweipoligen Eingang (100; 210); und
2.1.2 mit einer Steuerung (140; 240) zum Steuern der Messmittel;
wobei das Verfahren (300) die folgenden Schritte umfasst:
2.2 Anlegen (310) eines elektrischen Eingangssignals (In) an den zweipoligen elektrischen Eingang (100; 210);
2.3 die Steuerung (140; 240) ermittelt, ob das Eingangssignal (In) von einer elektrischen Spannungsquelle oder von einer elektrischen Stromquelle oder von einem elektrischen Widerstand oder von einem elektrischen Schalter stammt;
2.4 wozu mit Hilfe der Steuerung (140; 240) mindestens eine Messung (320; 420; 520; 610; 616, 630, 636) an dem zweipoligen Eingang (100; 210) mit Hilfe der Messmittel durchgeführt wird;
2.5 Anpassen (350; 440, 450; 540; 550; 560; 614, 620, 634, 640) des zweipoligen elektrischen Eingangs (100; 210) an die ermittelte Quelle des Eingangssignals (In);
**dadurch gekennzeichnet,**
2.6 dass die Steuerung (140; 240) in einem ersten Schritt nach dem Anlegen (310) eines elektrischen Eingangssignals (In) an den zweipoligen elektrischen Eingang (100; 210) mit den Mitteln zum Messen einer elektrischen Spannung eine erste Spannungsmessung (320) durchführt;
2.7 wobei an dem zweipoligen Eingang nur Eingangssignale von elektrischen Widerständen, elektrischen Strom- und Spannungsquellen angelegt werden;
2.8 dass die Steuerung (140; 240) in einem zweiten Schritt (330, 340) das Ergebnis der ersten Spannungsmessung (320) dahingehend prüft, ob die gemessene Spannung größer oder gleich Null und kleiner oder gleich einer positiven Minimalspannung ist, die größer als Null ist;
2.9 dass die Steuerung (140; 240) bei einem positiven Ergebnis der Prüfung in Schritt 2.8 in einem dritten Schritt mit den Mitteln zum Messen eines elektrischen Widerstands eine Widerstandsmessung (520) durchführt;
2.10 dass die Steuerung (140; 240) in einem vierten Schritt das Ergebnis der Widerstandsmessung (520) prüft (530) und
2.10.1 für den Fall, dass der gemessene Widerstand über einem Maximalwert liegt, in einem fünften Schritt den zweipoligen elektrischen Eingang (100; 210) an das Eingangssignal (In) anpasst (350; 450; 550; 634), indem die Steuerung (140; 240) die Mittel zum Messen eines elektrischen Stroms einschaltet;
2.10.2 für den Fall, dass der gemessene Widerstand größer als ein Minimalwert und kleiner oder gleich dem Maximalwert ist, in einem fünften Schritt den zweipoligen elektrischen Eingang (100; 210) an das Eingangssignal (In) anpasst (650), indem die Steuerung (140; 240) die Mittel zum Messen eines elektrischen Widerstands einschaltet und/oder eingeschaltet lässt; oder
2.10.3 für den Fall, dass der gemessene Widerstand kleiner oder gleich dem Minimalwert ist, in einem fünften Schritt den zweipoligen elektrischen Eingang (100; 210) an das Eingangssignal (In) anpasst (440; 540; 614), indem die Steuerung (140; 240) die Mittel zum Messen einer elektrischen Spannung einschaltet.

3. Verfahren (300) zur Konfiguration eines zweipoligen elektrischen Eingangs (100; 210),
3.1 wobei der elektrische Eingang (100; 210) zumindest mit den folgenden Mitteln ausgestattet wird:
3.1.1 mit Mitteln zum Messen einer elektrischen Spannung und eines elektrischen Stroms und eines elektrischen Widerstands an dem zweipoligen Eingang (100; 210); und
3.1.2 mit einer Steuerung (140; 240) zum Steuern der Messmittel;
wobei das Verfahren (300) die folgenden Schritte umfasst:
3.2 Anlegen (310) eines elektrischen Eingangssignals (In) an den zweipoligen elektrischen Eingang (100; 210);
3.3 die Steuerung (140; 240) ermittelt, ob das Eingangssignal (In) von einer elektrischen Spannungsquelle oder von einer elektrischen Stromquelle oder von einem elektrischen Widerstand oder von einem elektrischen Schalter stammt;
3.4 wozu mit Hilfe der Steuerung (140; 240) mindestens eine Messung (320; 420; 520; 610; 616, 630, 636) an dem zweipoligen Eingang (100; 210) mit Hilfe der Messmittel durchgeführt wird;
3.5 Anpassen (350; 440, 450; 540; 550; 560; 614, 620, 634, 640) des zweipoligen elektrischen Eingangs (100; 210) an die ermittelte Quelle des Eingangssignals (In);
**dadurch gekennzeichnet,**
3.6 dass die Steuerung (140; 240) in einem ersten Schritt nach dem Anlegen (310) eines elektrischen Eingangssignals (In) an den zweipoligen elektrischen Eingang (100; 210) mit den Mitteln zum Messen einer elektrischen Spannung eine erste Spannungsmessung (320) durchführt;
3.7 dass die Steuerung (140; 240) in einem zweiten Schritt (330, 340) das Ergebnis der ersten Spannungsmessung (320) dahingehend prüft, ob die gemessene Spannung größer oder gleich Null und kleiner oder gleich einer positiven Minimalspannung ist, die größer als Null ist;
3.8 dass die Steuerung (140; 240) bei einem positiven Ergebnis der Prüfung in Schritt 3.7 in einem dritten Schritt mit den Mitteln zum Messen eines elektrischen Widerstands eine Widerstandsmessung (520) durchführt;
3.9 dass die Steuerung (140; 240) in einem vierten Schritt (530) das Ergebnis der Widerstandsmessung (520) prüft; und
3.9.1 für den Fall, dass der gemessene Widerstand über einem Maximalwert liegt, in einem fünften Schritt Strom- (630) und Widerstandsmessungen (636) so lange abwechselnd durchführt, bis
3.9.1.1 eine der Strommessungen (630) einen Wert liefert, der größer als ein Minimalwert ist, woraufhin die Steuerung in einem sechsten Schritt (634) den zweipoligen elektrischen Eingang (100; 210) an das Eingangssignal (In) anpasst (350; 450; 550), indem die Steuerung die Mittel zum Messen eines elektrischen Stroms einschaltet und/oder eingeschaltet lässt; oder
3.9.1.2 eine der Widerstandsmessungen (636) einen Wert liefert, der kleiner oder gleich dem Maximalwert ist, woraufhin die Steuerung in einem sechsten Schritt den zweipoligen elektrischen Eingang (100; 210) an das Eingangssignal (In) anpasst (620; 640), indem die Steuerung die Mittel zum Messen eines elektrischen Widerstands einschaltet und/oder eingeschaltet lässt;
3.9.2 für den Fall, dass der gemessene Widerstand größer als ein Minimalwert und kleiner oder gleich dem Maximalwert ist, in einem fünften Schritt den zweipoligen elektrischen Eingang (100; 210) an das Eingangssignal (In) anpasst (650), indem die Steuerung die Mittel zum Messen eines elektrischen Widerstands einschaltet und/oder eingeschaltet lässt; oder
3.9.3 für den Fall, dass der gemessene Widerstand kleiner oder gleich dem Minimalwert ist, in einem fünften Schritt Spannungs- (610) und Widerstandsmessungen (616) so lange abwechselnd durchführt, bis
3.9.3.1 eine der Spannungsmessungen (610) einen Wert liefert, der größer als ein Minimalwert ist, woraufhin die Steuerung in einem sechsten Schritt den zweipoligen elektrischen Eingang (100; 210) an das Eingangssignal (In) anpasst (440; 540; 614), indem die Steuerung die Mittel zum Messen einer elektrischen Spannung einschaltet und/oder eingeschaltet lässt; oder
3.9.3.2 eine der Widerstandsmessungen (616) einen Wert liefert, der größer als der Minimalwert ist, woraufhin die Steuerung in einem sechsten Schritt den zweipoligen elektrischen Eingang (100; 210) an das Eingangssignal (In) anpasst (620; 640), indem die Steuerung die Mittel zum Messen eines elektrischen Widerstands einschaltet und/oder eingeschaltet lässt.

4. Verfahren (300) nach einem der vorhergehenden Ansprüche,
**dadurch gekennzeichnet,**
4.1 dass die Steuerung (140; 240) in einem zweiten Schritt das Ergebnis der ersten Spannungsmessung (320) dahingehend prüft (330), ob es einen Maximalwert überschreitet; und
4.2 woraufhin die Steuerung (140; 240) bei einem positiven Ergebnis der Prüfung in Schritt 4.1 in einem dritten Schritt den zweipoligen elektrischen Eingang (100; 210) an das Eingangssignal (In) anpasst (350; 450; 550; 634), indem die Steuerung (140; 240) die Mittel zum Messen eines elektrischen Stroms einschaltet.

5. Verfahren (300) nach einem der vorhergehenden Ansprüche,
**dadurch gekennzeichnet,**
5.1 dass die Steuerung (140; 240) in einem zweiten Schritt das Ergebnis der ersten Spannungsmessung (320) dahingehend prüft (330), ob die gemessene Spannung negativ ist;
5.2 woraufhin die Steuerung (140; 240) bei einem positiven Ergebnis der Prüfung in Schritt 5.1 in einem dritten Schritt den zweipoligen elektrischen Eingang (100; 210) in einen Fehlerzustand versetzt (380).

6. Verfahren (300) nach einem der vorhergehenden Ansprüche,
**dadurch gekennzeichnet,**
6.1 dass der zweipolige elektrische Eingang (100; 210) mit Mitteln ausgestattet wird, die ein Umpolen des Eingangssignals (In) ermöglichen;
6.2 dass die Steuerung (140; 240) in einem zweiten Schritt das Ergebnis der ersten Spannungsmessung (320) dahingehend prüft (330), ob die gemessene Spannung negativ ist;
6.3 woraufhin die Steuerung (140; 240) in einem dritten Schritt mit den Mitteln zum Umpolen des Eingangssignals (In) die Polung des Eingangssignals (In) umkehrt.

7. Verfahren (300) nach einem der vorhergehenden Ansprüche,
**dadurch gekennzeichnet,**
7.1 dass die mindestens eine Messung (320; 420; 520; 610; 616, 630, 636) an dem zweipoligen Eingang (100; 210) mithilfe eines Vierpols (220) erfolgt;
7.2 dass der zweipolige elektrische Eingang (100; 210) zwei Pole (110) des Vierpols (220) bildet und
7.3 die anderen Pole (230) den Ausgang des Vierpols.

8. Verfahren (300) nach dem vorhergehenden Anspruch,
**dadurch gekennzeichnet,**
**dass** das Ausgangssignal (X) des Vierpols (220) ein Spannungssignal darstellt, das unabhängig von der Art des Eingangssignals (In) in einem vorgegebenen Intervall liegt.

9. Verfahren (300) nach einem der vorhergehenden Ansprüche,
**dadurch gekennzeichnet,**
**dass** das Verfahren
9.1 mindestens einmal bei Inbetriebnahme,
9.2 nach jedem Neustart,
9.3 periodisch,
9.4 permanent
durchgeführt wird und/oder
9.5 manuell gestartet wird.

10. Computerprogramm mit Programmcode-Mitteln, um das Verfahren (300) gemäß einem der vorhergehenden Verfahrensansprüche durchzuführen, wenn das Computerprogramm auf einer Recheneinheit, einem Mikrocontroller, DSP, FPGA oder Computer oder auf einer Mehrzahl davon in einem Netzwerk ausgeführt wird.

11. Zweipoliger elektrischer Eingang (100;201) mit Messmittel und einer Steuerung (140), die eine Konfiguration des zweipoligen elektrischen Eingangs nach einem der vorhergehenden Verfahrensansprüche durchführt.

12. Gerät (200) mit mindestens einem zweipoligen elektrischen Eingang (100; 210) nach dem vorhergehenden Anspruch.

13. Gerät (200) nach dem vorhergehenden Anspruch,
**gekennzeichnet durch**
13.1 mindestens zwei zweipolige elektrische Eingänge nach Anspruch 11; und durch
13.2 eine Steuerung (140; 240), die die Konfiguration der mindestens zwei zweipoligen elektrischen Eingänge erkennt und daraus eine Konfiguration und/oder Steuermechanismen des Geräts (200) ableitet.

14. Gerät (200) nach dem vorhergehenden Anspruch,
**gekennzeichnet durch**
einen Multiplexer, der es ermöglicht, die mindestens zwei Eingänge nacheinander anzusteuern.

15. Anlage mit mindestens einem Gerät (200) nach einem der Ansprüche 12 bis 14.

## Claims

1. Method (300) for configuring a two-pole electrical input (100; 210),
1.1 wherein the electrical input (100; 210) is provided with at least the following means:
1.1.1 with means for measuring an electrical voltage and an electrical current at the two-pole input (100; 210); and
1.1.2 with a controller (140; 240) for controlling the means for measuring;
the method (300) comprising the steps of:
1.2 applying (310) an electrical input signal (In) to the two-pole electrical input (100; 210);
1.3 determining (140; 240) whether the input signal (In) is from an electrical voltage source or from an electrical current source or from an electrical resistor or from an electrical switch;
1.4 for which purpose at least one measurement (320; 420; 520; 610; 616, 630, 636) is carried out on the two-pole input (100; 210) with the aid of the controller (140; 240) and the means for measuring;
1.5 adapting (350; 440, 450; 540; 550; 560; 614, 620, 634, 640) the two-pole electrical input (100; 210) to the determined source of the input signal (In);
**characterized in**
1.6 that, in a first step, after applying (310) an electrical input signal (In) to the two-pole electrical input (100; 210), the controller (140; 240) performs a first voltage measurement (320) with the means for measuring an electrical voltage;
1.7 that, in a second step, the controller (140; 240) checks (330, 340) that the result of the first voltage measurement (320) is greater than a positive minimum voltage and less than or equal to a maximum voltage which is greater than the minimum voltage;
1.8 that, in a third step, in the event of a positive result of the check in step 1.7, the controller (140; 240) carries out a second voltage measurement (420) using the means for measuring an electrical voltage;
1.8.1 where, for the second voltage measurement (420), a resistance is used which is smaller than a resistance used for the first voltage measurement;
1.9 that, in a fourth step, the controller (140; 240) checks (430) that the result of the second voltage measurement (420) is greater than or equal to the result of the first voltage measurement (320);
1.10 where, in a fifth step, in the event of a negative result of the check in step 1.9, the controller (140; 240) adapts (350; 450; 550; 634) the two-pole electrical input (100; 210) to the input signal (In) by switching on and/or leaving switched on the means for measuring an electrical current; or
1.11 where, in a fifth step, in the event of a positive result of the check in step 1.9, the controller (140; 240) adapts (440; 540; 614) the two-pole electrical input (100; 210) to the input signal (In) by switching on the means for measuring an electrical voltage.

2. Method (300) for configuring a two-pole electrical input (100; 210),
2.1 wherein the electrical input (100; 210) is provided with at least the following means:
2.1.1 with means for measuring an electrical voltage and an electrical current and an electrical resistance at the two-pole input (100; 210); and
2.1.2 with a controller (140; 240) for controlling the means for measuring;
the method (300) comprising the steps of:
2.2 applying (310) an electrical input signal (In) to the two-pole electrical input (100; 210);
2.3 determining (140; 240) whether the input signal (In) is from an electrical voltage source or from an electrical current source or from an electrical resistor or from an electrical switch;
2.4 for which purpose at least one measurement (320; 420; 520; 610; 616, 630, 636) is carried out on the two-pole input (100; 210) with the aid of the the controller (140; 240) and the means for measuring;
2.5 adapting (350; 440, 450; 540; 550; 560; 614, 620, 634, 640) the two-pole electrical input (100; 210) to the determined source of the input signal (In);
**characterized in**
2.6 that, in a first step, after applying (310) an electrical input signal (In) to the two-pole electrical input (100; 210), the controller (140; 240) performs a first voltage measurement (320) with the means for measuring an electrical voltage;
2.7 where only input signals from electrical resistance, electrical current and voltage sources are applied to the two-terminal input;
2.8 that, in a second step (330, 340), the controller (140; 240) checks that the result of the first voltage measurement (320) is greater than or equal to zero and less than or equal to a positive minimum voltage that is greater than zero;
2.9 that, in a third step, in the event of a positive result of the check in step 2.8, the controller (140; 240) performs a resistance measurement (520) using the means for measuring an electrical resistance;
2.10 that, in a fourth step, the controller (140; 240) checks (530) the result of the resistance measurement (520),
2.10.1 where, in a fifth step, in the event that the measured resistance is above a maximum value, the controller (140; 240) adapts (350; 450; 550; 634) the two-pole electrical input (100; 210) to the input signal (In) by switching on the means for measuring an electrical current;
2.10.2 where, in a fifth step, in the event that the measured resistance is greater than a minimum value and less than or equal to the maximum value, the controller (140; 240) adapts (650) the two-pole electrical input (100; 210) to the input signal (In) by switching on and/or leaving switched on the means for measuring an electrical resistance; or
2.10.3 where, in a fifth step, in the event that the measured resistance is less than or equal to the minimum value, the controller (140; 240) adapts (440; 540; 614) the two-pole electrical input (100; 210) to the input signal (In) by switching on the means for measuring an electrical voltage.

3. Method (300) for configuring a two-pole electrical input (100; 210),
3.1 wherein the electrical input (100; 210) is provided with at least the following means:
3.1.1 with means for measuring an electrical voltage and an electrical current and an electrical resistance at the two-pole input (100; 210); and
3.1.2 with a controller (140; 240) for controlling the means for measuring;
the method (300) comprising the following steps:
3.2 applying (310) an electrical input signal (In) to the two-pole electrical input (100; 210);
3.3 determining (140; 240) whether the input signal (In) is from an electrical voltage source or from an electrical current source or from an electrical resistor or from an electrical switch;
3.4 for which purpose at least one measurement (320; 420; 520; 610; 616, 630, 636) is carried out on the two-pole input (100; 210) with the aid of the the controller (140; 240) and the means for measuring;
3.5 adapting (350; 440, 450; 540; 550; 560; 614, 620, 634, 640) the two-pole electrical input (100; 210) to the determined source of the input signal (In);
**characterized in**
3.6 that, in a first step, after applying (310) an electrical input signal (In) to the two-pole electrical input (100; 210), the controller (140; 240) performs a first voltage measurement (320) with the means for measuring an electrical voltage;
3.7 that, in a second step (330, 340), the controller (140; 240) checks that the result of the first voltage measurement (320) is greater than or equal to zero and less than or equal to a positive minimum voltage that is greater than zero;
3.8 that in a third step, in the event of a positive result of the check in step 3.7, the controller (140; 240) performs a resistance measurement (520) using the means for measuring an electrical resistance;
3.9 that, in a fourth step (530), the controller (140; 240) checks the result of the resistance measurement (520),
3.9.1 where, in a fifth step, in the event that the measured resistance is above a maximum value, current (630) and resistance measurements (636) are performed alternately until
3.9.1.1 one of the current measurements (630) provides a value which is greater than a minimum value, whereupon, in a sixth step (634), the controller adapts (350; 450; 550) the two-pole electrical input (100; 210) to the input signal (In) by switching on and/or leaving switched on the means for measuring an electrical current; or
3.9.1.2 one of the resistance measurements (636) provides a value that is less than or equal to the maximum value, whereupon, in a sixth step, the controller adapts (620; 640) the two-pole electrical input (100; 210) to the input signal (In) by switching on and/or leaving switched on the means for measuring an electrical resistance;
3.9.2 where, in a fifth step, in the event that the measured resistance is greater than a minimum value and less than or equal to the maximum value, the controller adapts (650) the two-pole electrical input (100; 210) to the input signal (In) by switching on and/or leaving switched on the means for measuring an electrical resistance; or
3.9.3 where, in a fifth step, in the event that the measured resistance is less than or equal to the minimum value, voltage (610) and resistance (616) measurements are performed alternately until
3.9.3.1 one of the voltage measurements (610) provides a value greater than a minimum value, whereupon, in a sixth step, the controller adapts (440; 540; 614) the two-pole electrical input (100; 210) to the input signal (In) by switching on and/or leaving switched on the means for measuring an electrical voltage; or
3.9.3.2 one of the resistance measurements (616) provides a value which is greater than the minimum value, whereupon, in a sixth step, the controller adapts (620; 640) the two-pole electrical input (100; 210) to the input signal (In) by switching on and/or leaving switched on the means for measuring an electrical resistance.

4. Method (300) according to any one of the preceding claims,
**characterized in that,**
4.1 in a second step, the controller (140; 240) checks (330) that the result of the first voltage measurement (320) exceeds a maximum value; and
4.2 where, in a third step, in the event of a positive result of the check in step 4.1, the controller (140; 240) adapts (350; 450; 550; 634) the two-pole electrical input (100; 210) to the input signal (In) by switching on the means for measuring an electrical current.

5. Method (300) according to any one of the preceding claims,
**characterized in that,**
5.1 in a second step, the controller (140; 240) checks (330) that the result of the first voltage measurement (320) is negative;
5.2 where, in a third step, in the event of a positive result of the check in step 5.1, the controller (140; 240) sets (380) the two-pole electrical input (100; 210) to a fault state.

6. Method (300) according to any one of the preceding claims,
**characterized in**
6.1 that the two-pole electrical input (100; 210) is provided with means enabling polarity reversal of the input signal (In);
6.2 that, in a second step, the controller (140; 240) checks (330) that the result of the first voltage measurement (320) is negative;
6.3 whereupon, in a third step, the controller (140; 240) reverses the polarity of the input signal (In) using the means for reversing the polarity of the input signal (In).

7. Method (300) according to any one of the preceding claims,
**characterized in**
7.1 that the at least one measurement (320; 420; 520; 610; 616, 630, 636) at the two-pole input (100; 210) is performed by means of a four-pole structure (220);
7.2 where the two-pole electrical input (100; 210) forms two poles (110) of the four-pole structure (220) and
7.3 the other poles (230) form the output of the four-pole structure.

8. Method (300) according to the preceding claim,
**characterized in that**
the output signal (X) of the four-pole structure (220) represents a voltage signal which is in a predetermined interval regardless of the type of input signal (In).

9. Method (300) according to any one of the preceding claims,
**characterized in that**
the method is carried out
9.1 at least once during start-up,
9.2 after each restart,
9.3 periodically,
9.4 permanently
and/or
9.5 is started manually.

10. Computer program comprising program code means to perform the method (300) according to any one of the preceding method claims, when the computer program is executed on a computing device, microcontroller, DSP, FPGA, computer, or on a plurality thereof in a network.

11. Two-pole electrical input (100;201) comprising means for measuring and a controller (140) performing a configuration of the two-pole electrical input according to any of the preceding method claims.

12. Device (200) with at least one two-pole electrical input (100; 210) according to the preceding claim.

13. Device (200) according to the preceding claim,
**characterized by**
13.1 at least two two-pole electrical inputs according to claim 11; and by
13.2 a controller (140; 240) that detects the configuration of the at least two two-pole electrical inputs and derives therefrom a configuration and/or control mechanisms of the device (200).

14. Device (200) according to the preceding claim,
**characterized by**
a multiplexer enabling the at least two inputs to be driven in succession.

15. System comprising at least one device (200) according to any one of claims 12 to 14.

## Revendications

1. Procédé (300) de configuration d'une entrée électrique bipolaire (100 ; 210),
1.1 dans lequel l'entrée électrique (100 ; 210) est équipée au moins des moyens suivants :
1.1.1 des moyens pour mesurer une tension électrique et un courant électrique sur l'entrée bipolaire (100 ; 210) ; et
1.1.2 avec une commande (140 ; 240) pour commander les moyens de mesure ;
dans lequel le procédé (300) comprend les étapes suivantes :
1.2 appliquer (310) un signal d'entrée électrique (In) à l'entrée électrique bipolaire (100 ; 210) ;
1.3 la commande (140 ; 240) détermine si le signal d'entrée (In) provient d'une source de tension électrique ou d'une source de courant électrique ou d'une résistance électrique ou d'un interrupteur électrique ;
1.4 au moins une mesure (320 ; 420 ; 520 ; 610 ; 616, 630, 636) est effectuée à l'aide de la commande (140 ; 240) sur l'entrée bipolaire (100 ; 210) à l'aide des moyens de mesure ;
1.5 adapter (350 ; 440, 450 ; 540 ; 550 ; 560 ; 614, 620, 634, 640) l'entrée électrique bipolaire (100 ; 210) à la source déterminée du signal d'entrée (In) ;
**caractérisé en ce que**
1.6 que la commande (140 ; 240), dans une première étape, après l'application (310) d'un signal électrique d'entrée (In) à l'entrée électrique bipolaire (100 ; 210), effectue une première mesure de tension (320) avec les moyens de mesure d'une tension électrique ;
1.7 la commande (140 ; 240) vérifie (330, 340), dans une deuxième étape, le résultat de la première mesure de tension (320) pour savoir s'il est supérieur à une tension minimale positive et inférieur ou égal à une tension maximale qui est supérieure à la tension minimale ;
1.8 la commande (140 ; 240), en cas de résultat positif du contrôle à l'étape 1.7, effectue dans une troisième étape une deuxième mesure de tension (420) avec les moyens de mesure d'une tension électrique ;
1.8.1 dans lequel, pour la deuxième mesure de tension (420), on utilise une résistance qui est plus petite qu'une résistance utilisée pour la première mesure de tension ;
1.9 dans une quatrième étape, la commande (140 ; 240) vérifie (430) le résultat de la deuxième mesure de tension (420) pour savoir s'il est supérieur ou égal au résultat de la première mesure de tension (320) ;
1.10 après quoi, en cas de résultat négatif de la vérification de l'étape 1.9, la commande (140 ; 240) adapte (350 ; 450 ; 550 ; 634), dans une cinquième étape, l'entrée électrique bipolaire (100 ; 210) au signal d'entrée (In), la commande (140 ; 240) activant et/ou maintenant activés les moyens de mesure d'un courant électrique ; ou
1.11 après quoi, si le résultat du test de l'étape 1.9 est positif, la commande (140 ; 240) adapte (440 ; 540 ; 614), dans une cinquième étape, l'entrée électrique bipolaire (100 ; 210) au signal d'entrée (In) en mettant sous tension les moyens de mesure d'une tension électrique.

2. Procédé (300) de configuration d'une entrée électrique bipolaire (100 ; 210),
2.1 dans lequel l'entrée électrique (100 ; 210) est équipée au moins des moyens suivants :
2.1.1 des moyens de mesure d'une tension électrique et d'un courant électrique et d'une résistance électrique sur l'entrée bipolaire (100 ; 210) ; et
2.1.2 avec une commande (140 ; 240) pour commander les moyens de mesure ;
dans lequel le procédé (300) comprend les étapes suivantes :
2.2 appliquer (310) un signal d'entrée électrique (In) à l'entrée électrique bipolaire (100 ; 210) ;
2.3 la commande (140 ; 240) détermine si le signal d'entrée (In) provient d'une source de tension électrique ou d'une source de courant électrique ou d'une résistance électrique ou d'un interrupteur électrique ;
2.4 au moins une mesure (320 ; 420 ; 520 ; 610 ; 616, 630, 636) est effectuée à l'aide de la commande (140 ; 240) sur l'entrée bipolaire (100 ; 210) à l'aide des moyens de mesure ;
2.5 adapter (350 ; 440, 450 ; 540 ; 550 ; 560 ; 614, 620, 634, 640) l'entrée électrique bipolaire (100 ; 210) à la source déterminée du signal d'entrée (In) ;
**caractérisé en ce que**
2.6 **en ce que**, dans une première étape, après l'application (310) d'un signal électrique d'entrée (In) à l'entrée électrique bipolaire (100 ; 210), la commande (140 ; 240) effectue une première mesure de tension (320) avec les moyens de mesure d'une tension électrique ;
2.7 dans lequel seuls des signaux d'entrée de résistances électriques, de sources de courant et de tension électriques sont appliqués à l'entrée bipolaire ;
2.8 la commande (140 ; 240) vérifie, dans une deuxième étape (330, 340), le résultat de la première mesure de tension (320) pour savoir si la tension mesurée est supérieure ou égale à zéro et inférieure ou égale à une tension minimale positive qui est supérieure à zéro ;
2.9 la commande (140 ; 240), en cas de résultat positif du contrôle à l'étape 2.8, effectue dans une troisième étape une mesure de résistance (520) avec les moyens de mesure d'une résistance électrique ;
2.10 la commande (140 ; 240) vérifie (530) dans une quatrième étape le résultat de la mesure de résistance (520) et
2.10.1 dans le cas où la résistance mesurée est supérieure à une valeur maximale, dans une cinquième étape, elle adapte (350 ; 450 ; 550 ; 634) l'entrée électrique bipolaire (100 ; 210) au signal d'entrée (In), la commande (140 ; 240) activant les moyens de mesure d'un courant électrique ;
2.10.2 dans le cas où la résistance mesurée est supérieure à une valeur minimale et inférieure ou égale à la valeur maximale, dans une cinquième étape, adapter (650) l'entrée électrique bipolaire (100 ; 210) au signal d'entrée (In) en activant et/ou en laissant activés les moyens de mesure d'une résistance électrique par la commande (140 ; 240) ; ou
2.10.3 dans le cas où la résistance mesurée est inférieure ou égale à la valeur minimale, dans une cinquième étape, adapte (440 ; 540 ; 614) l'entrée électrique bipolaire (100 ; 210) au signal d'entrée (In) en activant par la commande (140 ; 240) les moyens de mesure d'une tension électrique.

3. Procédé (300) de configuration d'une entrée électrique bipolaire (100 ; 210),
3.1 dans lequel l'entrée électrique (100 ; 210) est équipée au moins des moyens suivants :
3.1.1 des moyens de mesure d'une tension électrique et d'un courant électrique et d'une résistance électrique sur l'entrée bipolaire (100 ; 210) ; et
3.1.2 avec une commande (140 ; 240) pour commander les moyens de mesure ;
dans lequel le procédé (300) comprend les étapes suivantes :
3.2 appliquer (310) un signal d'entrée électrique (In) à l'entrée électrique bipolaire (100 ; 210) ;
3.3 la commande (140 ; 240) détermine si le signal d'entrée (In) provient d'une source de tension électrique ou d'une source de courant électrique ou d'une résistance électrique ou d'un interrupteur électrique ;
3.4 au moins une mesure (320 ; 420 ; 520 ; 610 ; 616, 630, 636) est effectuée à l'aide de la commande (140 ; 240) sur l'entrée bipolaire (100 ; 210) à l'aide des moyens de mesure ;
3.5 adapter (350 ; 440, 450 ; 540 ; 550 ; 560 ; 614, 620, 634, 640) l'entrée électrique bipolaire (100 ; 210) à la source déterminée du signal d'entrée (In) ;
**caractérisé en ce que**
3.6 dans une première étape, après l'application (310) d'un signal électrique d'entrée (In) à l'entrée électrique bipolaire (100 ; 210), la commande (140 ; 240) effectue une première mesure de tension (320) avec les moyens de mesure d'une tension électrique ;
3.7 la commande (140 ; 240) vérifie, dans une deuxième étape (330, 340), le résultat de la première mesure de tension (320) pour savoir si la tension mesurée est supérieure ou égale à zéro et inférieure ou égale à une tension minimale positive qui est supérieure à zéro ;
3.8 **en ce que** la commande (140 ; 240), en cas de résultat positif du contrôle à l'étape 3.7, effectue dans une troisième étape une mesure de résistance (520) avec les moyens de mesure d'une résistance électrique ;
3.9 la commande (140 ; 240) vérifie dans une quatrième étape (530) le résultat de la mesure de résistance (520) ; et
3.9.1 dans le cas où la résistance mesurée est supérieure à une valeur maximale, effectue dans une cinquième étape des mesures de courant (630) et de résistance (636) en alternance jusqu'à ce que
3.9.1.1 l'une des mesures de courant (630) fournit une valeur supérieure à une valeur minimale, après quoi, dans une sixième étape (634), la commande adapte (350 ; 450 ; 550) l'entrée électrique bipolaire (100 ; 210) au signal d'entrée (In) en activant et/ou en maintenant activés les moyens de mesure d'un courant électrique ; ou
3.9.1.2 l'une des mesures de résistance (636) fournit une valeur inférieure ou égale à la valeur maximale, après quoi, dans une sixième étape, la commande adapte (620 ; 640) l'entrée électrique bipolaire (100 ; 210) au signal d'entrée (In), en activant et/ou en laissant activés les moyens de mesure d'une résistance électrique ;
3.9.2 dans le cas où la résistance mesurée est supérieure à une valeur minimale et inférieure ou égale à la valeur maximale, dans une cinquième étape, adapter (650) l'entrée électrique bipolaire (100 ; 210) au signal d'entrée (In) en activant et/ou en laissant activés les moyens de mesure d'une résistance électrique par la commande ; ou
3.9.3 dans le cas où la résistance mesurée est inférieure ou égale à la valeur minimale, alterne, dans une cinquième étape, des mesures de tension (610) et de résistance (616) jusqu'à ce que
3.9.3.1 l'une des mesures de tension (610) fournit une valeur supérieure à une valeur minimale, après quoi, dans une sixième étape, la commande adapte (440 ; 540 ; 614) l'entrée électrique bipolaire (100 ; 210) au signal d'entrée (In) en activant et/ou en maintenant activés les moyens de mesure d'une tension électrique ; ou
3.9.3.2 l'une des mesures de résistance (616) fournit une valeur supérieure à la valeur minimale, après quoi, dans une sixième étape, la commande adapte (620 ; 640) l'entrée électrique bipolaire (100 ; 210) au signal d'entrée (In) en activant et/ou en maintenant activés les moyens de mesure d'une résistance électrique.

4. Procédé (300) selon l'une quelconque des revendications précédentes,
**caractérisé en ce que**
4.1 dans une deuxième étape, la commande (140 ; 240) vérifie (330) le résultat de la première mesure de tension (320) pour savoir s'il dépasse une valeur maximale ; et
4.2 après quoi, si le résultat du contrôle de l'étape 4.1 est positif, la commande (140 ; 240) adapte (350 ; 450 ; 550 ; 634), dans une troisième étape, l'entrée électrique bipolaire (100 ; 210) au signal d'entrée (In), la commande (140 ; 240) activant les moyens de mesure d'un courant électrique.

5. Procédé (300) selon l'une quelconque des revendications précédentes,
**caractérisé en ce que**
5.1 dans une deuxième étape, la commande (140 ; 240) vérifie (330) le résultat de la première mesure de tension (320) pour savoir si la tension mesurée est négative ;
5.2 après quoi, en cas de résultat positif du contrôle effectué à l'étape 5.1, la commande (140 ; 240) place, dans une troisième étape, l'entrée électrique bipolaire (100 ; 210) dans un état de défaut (380).

6. Procédé (300) selon l'une quelconque des revendications précédentes,
**caractérisé en ce que,**
6.1 que l'entrée électrique bipolaire (100 ; 210) est équipée de moyens permettant d'inverser la polarité du signal d'entrée (In) ;
6.2 dans une deuxième étape, la commande (140 ; 240) vérifie (330) le résultat de la première mesure de tension (320) pour savoir si la tension mesurée est négative ;
6.3 après quoi, dans une troisième étape, la commande (140 ; 240) inverse la polarité du signal d'entrée (In) à l'aide des moyens d'inversion de la polarité du signal d'entrée (In).

7. Procédé (300) selon l'une quelconque des revendications précédentes,
**caractérisé en ce que**
7.1 que la au moins une mesure (320 ; 420 ; 520 ; 610 ; 616, 630, 636) sur l'entrée bipolaire (100 ; 210) est effectuée à l'aide d'un quadripôle (220) ;
7.2 **en ce que** l'entrée électrique bipolaire (100 ; 210) forme deux pôles (110) du quadripôle (220) et
7.3 les autres pôles (230) constituent la sortie du quadripôle.

8. Procédé (300) selon la revendication précédente,
**caractérisé en ce que**
le signal de sortie (X) du quadripôle (220) représente un signal de tension qui se situe dans un intervalle prédéterminé, indépendamment de la nature du signal d'entrée (In).

9. Procédé (300) selon l'une quelconque des revendications précédentes,
**caractérisé en ce que**
le procédé est effectuée
9.1 au moins une fois lors de la mise en service,
9.2 après chaque redémarrage,
9.3 périodiquement,
9.4 en permanence
et/ou
9.5 soit lancé manuellement.

10. Programme d'ordinateur comprenant des moyens de code de programme pour exécuter le procédé (300) selon l'une quelconque des revendications de procédé précédentes, lorsque le programme d'ordinateur est exécuté sur une unité de calcul, un microcontrôleur, un DSP, un FPGA ou un ordinateur, ou sur une pluralité de ceux-ci dans un réseau.

11. Entrée électrique bipolaire (100 ; 201) comprenant des moyens de mesure et une commande (140) qui exécute une configuration de l'entrée électrique bipolaire selon l'une des revendications de procédé précédentes.

12. Appareil (200) avec au moins une entrée électrique bipolaire (100 ; 210) selon la revendication précédente.

13. Appareil (200) selon la revendication précédente,
**caractérisé par**
13.1 au moins deux entrées électriques bipolaires selon la revendication 11 ; et par
13.2 une commande (140 ; 240) qui reconnaît la configuration des au moins deux entrées électriques bipolaires et en déduit une configuration et/ou des mécanismes de commande de l'appareil (200).

14. Appareil (200) selon la revendication précédente,
**caractérisé par**
un multiplexeur permettant de piloter successivement lesdites au moins deux entrées.

15. Installation comprenant au moins un appareil (200) selon l'une des revendications 12 à 14.
